(19) Europäisches Patentamt / European Patent Office / Office européen des brevets

(11) **EP 4 746 566 A1**

(12) **EUROPEAN PATENT APPLICATION**
published in accordance with Art. 153(4) EPC

(43) Date of publication:
**20.05.2026 Bulletin 2026/21**

(21) Application number: **24858367.6**

(22) Date of filing: **19.08.2024**

(51) International Patent Classification (IPC):
*H04W 74/00* (2009.01)

(52) Cooperative Patent Classification (CPC):
**H04W 72/232; H04W 74/00; H04W 74/08**

(86) International application number:
**PCT/CN2024/113169**

(87) International publication number:
**WO 2025/044824 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 CN 202311112834**

(71) Applicant: **Huawei Technologies Co., Ltd.
Shenzhen, Guangdong 518129 (CN)**

(72) Inventors:
- **HUA, Meng
  Shenzhen, Guangdong 518129 (CN)**
- **GAO, Fei
  Shenzhen, Guangdong 518129 (CN)**
- **DING, Mengying
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CONTROL CHANNEL TRANSMISSION METHOD AND COMMUNICATION APPARATUS**

(57) Embodiments of this application provide a control channel transmission method and a communication apparatus, and relate to the field of communication technologies, to reduce receiving complexity of a terminal device when the terminal device performs cell scheduling by using two levels of DCI. A specific solution is: receiving indication information, where the indication information indicates a first physical downlink control channel candidate PDCCH candidate set; receiving first downlink control information DCI; and monitoring second DCI on a second PDCCH candidate set, where the second PDCCH candidate set is determined based on the first DCI, and the second PDCCH candidate set belongs to the first PDCCH candidate set. Embodiments of this application are used for a process of control channel transmission.

FIG. 5

## Description

This application claims priority to Chinese Patent Application No. 202311112834.7, filed with the China National Intellectual Property Administration on August 30, 2023 and entitled "CONTROL CHANNEL TRANSMISSION METHOD AND COMMUNICATION APPARATUS", which is incorporated herein by reference in its entirety.

## TECHNICAL FIELD

Embodiments of this application relate to the field of communication technologies, and in particular, to a control channel transmission method and a communication apparatus.

## BACKGROUND

In new radio (new radio, NR), a downlink control channel (physical downlink control channel, PDCCH) carries downlink control information (downlink control information, DCI), which may be used for scheduling a downlink shared channel (physical downlink shared channel, PDSCH), an uplink shared channel (physical uplink shared channel, PUSCH), or the like.

Currently, two levels of DCI are proposed, including first-level DCI and second-level DCI. The two levels of DCI carried on the PDCCH may be used for sending different downlink scheduling information, and are jointly used for completing PDSCH/PUSCH scheduling or another function, so that a control channel resource can be saved, PDCCH detection complexity of a terminal device can be reduced, and so on. However, in a scenario of the two levels of DCI, if the two levels of DCI are used for scheduling at least one cell, the terminal device needs to perform detection on the two levels of DCI on a plurality of PDCCH candidates (candidates). As a result, receiving complexity of the terminal device is high.

## SUMMARY

Embodiments of this application provide a control channel transmission method and a communication apparatus, to reduce receiving complexity of a terminal device when the terminal device performs cell scheduling by using two levels of DCI.

To achieve the foregoing objective, the following technical solutions are used in embodiments of this application.

According to a first aspect, a control channel transmission method is provided. The method includes: receiving indication information, where the indication information indicates a first physical downlink control channel candidate PDCCH candidate set; receiving first downlink control information DCI; and monitoring second DCI on a second PDCCH candidate set, where the second PDCCH candidate set is determined based on the first DCI, and the second PDCCH candidate set belongs to the first PDCCH candidate set.

The first DCI and the second DCI may be understood as two levels of DCI. The first DCI may also be referred to as first-level DCI, and the second DCI may also be referred to as second-level DCI. The first PDCCH candidate set may be understood as including PDCCH candidates that are in a search space set (search speace set) configured by a network side for a terminal device to monitor the second DCI, that are within a time-frequency range of a control resource set (CORESET) associated with the search space set, and that are at different aggregation levels (aggregation levels, ALs).

In comparison with a problem in a conventional technology that receiving complexity of the terminal device is high because the terminal device needs to monitor all PDCCH candidates in the first PDCCH candidate set configured by the network side when receiving the first PDCCH candidate set, in this application, when receiving the first DCI, the terminal device may determine the second PDCCH candidate set from the first PDCCH candidate set based on the first DCI, and the terminal device does not need to monitor a PDCCH candidate that belongs to the first PDCCH candidate set but does not belong to the second PDCCH candidate set, so that receiving complexity of the terminal device is low. In addition, the first DCI has been correctly received. If the second PDCCH candidate set for monitoring the second DCI is determined based on the first DCI, receiving performance of receiving the second DCI by the terminal device is equivalent to receiving performance of receiving the first DCI.

In a possible design, the monitoring the second DCI on the second PDCCH candidate set includes: when the first DCI is detected within a first time interval, monitoring the second DCI on the second PDCCH candidate set within the first time interval. If the first DCI is detected within the first time interval, the terminal device may determine the second PDCCH candidate set from the first PDCCH candidate set corresponding to the first DCI detected within the first time interval, and monitor the second DCI on the second PDCCH candidate set. The first PDCCH candidate set corresponding to the first DCI detected within the first time interval is within the first time interval. The first DCI detected within the first time interval may correspond to one or more first PDCCH candidate sets. When the first DCI detected within the first time interval corresponds to a plurality of first PDCCH candidate sets, the terminal device needs to determine a second PDCCH candidate set from each of the plurality of first PDCCH candidate sets, and after receiving the first DCI, monitors the second DCI in each first PDCCH candidate set of a plurality of second PDCCH candidate sets, so that complexity of receiving the second DCI by the terminal device can be reduced.

In a possible design, the monitoring the second DCI on the second PDCCH candidate set includes: when the first DCI is detected within the first time interval, monitoring the second DCI on the second PDCCH candidate set within a second time interval. If the first DCI is detected within the first time interval, the terminal device may determine the second PDCCH candidate set from the first PDCCH candidate set corresponding to the first DCI detected within the first time interval, and monitor the second DCI on the second PDCCH candidate set. The first PDCCH candidate set corresponding to the first DCI detected within the first time interval is within the second time interval. The first DCI detected within the first time interval may correspond to one or more first PDCCH candidate sets. The first time interval and the second time interval have different start time and a same time length. The start time of the second time interval is later than the start time of the first time interval. When the first DCI detected within the first time interval corresponds to a plurality of first PDCCH candidate sets, the terminal device needs to determine a second PDCCH candidate set from each of the plurality of first PDCCH candidate sets, and after receiving the first DCI, monitors the second DCI in each first PDCCH candidate set of a plurality of second PDCCH candidate sets, so that complexity of receiving the second DCI by the terminal device can be reduced.

According to a second aspect, a control channel transmission method is provided. The method includes: sending indication information, where the indication information indicates a first PDCCH candidate set; sending first DCI, where the first DCI indicates a second PDCCH candidate set, and the second PDCCH candidate set belongs to the first PDCCH candidate set; and sending second DCI on the second PDCCH candidate set.

According to the first aspect, a terminal device side determines the second PDCCH candidate set based on the first PDCCH candidate set before receiving the second DCI. On a network side, for a radio access network device, for example, a base station, the base station may also determine the second PDCCH candidate set from the first PDCCH candidate set based on a process similar to that in the first aspect, and send the second DCI on the second PDCCH candidate set. In some implementations, a process in which the base station determines the second PDCCH candidate set is different from a process in which the terminal device determines the PDCCH candidate set. For the base station, when an AL and a quantity of bits (size) of the first DCI meet a relationship with an AL and a size of the second DCI, the base station sends the second DCI on a PDCCH candidate corresponding to the determined AL of the second DCI. For a base station side, complexity of sending the second DCI by the base station is also reduced.

The following shows a plurality of possible designs in the first aspect and the second aspect.

In a possible design, the first DCI and the second DCI are used for scheduling data transmission of at least one cell. For example, the first DCI and the second DCI are used for multi-cell scheduling. In this way, in this application, complexity of receiving the second DCI by the terminal device when the two levels of DCI are used for multi-cell scheduling can be reduced.

In a possible design, the first DCI includes an indication of a quantity of bits of the second DCI. For example, the first DCI may implicitly or explicitly indicate the quantity of bits of the second DCI. In this way, during determining of the second PDCCH candidate set from the first PDCCH candidate set, the second PDCCH candidate set may be determined based on the quantity of bits of the first DCI, the quantity of bits of the second DCI, and the AL of the received first DCI. In this way, when an AL range of the second DCI is determined, a bit rate and receiving performance of the second DCI are equivalent to those of the first DCI.

In a possible design, the second PDCCH candidate set is determined based on an AL of a PDCCH candidate carrying the first DCI. For example, the second PDCCH candidate set is determined based on the quantity of bits of the first DCI, the AL of the PDCCH candidate carrying the first DCI, and the quantity of bits of the second DCI. For example, the second PDCCH candidate set is determined based on the AL of the PDCCH candidate carrying the first DCI and a quantity of carriers scheduled by using the second DCI. When the second PDCCH candidate set is determined based on the AL of the PDCCH candidate carrying the first DCI, complexity of receiving the second DCI by the terminal device can be reduced, and the terminal device does not need to monitor all PDCCH candidates in the first PDCCH candidate set.

In a possible design, a PDCCH candidate in the second PDCCH candidate set is a PDCCH candidate that is in the first PDCCH candidate set and whose AL is greater than or equal to a first AL, where the first AL is determined based on the quantity of bits of the first DCI, the AL of the PDCCH candidate carrying the first DCI, and the quantity of bits of the second DCI; or the first AL is determined based on the AL of the PDCCH candidate carrying the first DCI and the quantity of carriers scheduled by using the second DCI. In this way, when the first AL is determined based on the quantity of bits of the first DCI, the AL of the PDCCH candidate carrying the first DCI, and the quantity of bits of the second DCI, or the first AL is determined based on the AL of the PDCCH candidate carrying the first DCI and the quantity of carriers scheduled by using the second DCI, and the second PDCCH candidate set is obtained by selecting the PDCCH candidate that is in the first PDCCH candidate set and whose AL is greater than or equal to the first AL, the bit rate and the receiving performance of the second DCI are equivalent to those of the first DCI.

In a possible design, a quantity of PDCCH candidates in the second PDCCH candidate set is less than or equal to a preset total quantity. In other words, when it is specified that the quantity of PDCCH candidates in the second PDCCH candidate set is less than the preset total quantity, and an AL is an AL that is in the first PDCCH candidate set and that is greater than or equal to the first AL, the terminal device may monitor the second PDCCH candidate set, that is, a plurality of PDCCH candidates, to ensure scheduling flexibility on the network side, and avoid PDCCH blocking during multi-user scheduling performed by using the two levels of DCI.

In a possible design, the PDCCH candidates in the second PDCCH candidate set are the first preset total quantity of PDCCH candidates obtained by sorting in ascending order of ALs, PDCCH candidates that are in the first PDCCH candidate set and whose ALs are greater than or equal to the first AL, and that are sorted. In this way, when it is ensured that the receiving performance of the second DCI is equivalent to that of the first DCI, a PDCCH candidate at a small AL in PDCCH candidates that meet a performance requirement may be used to monitor the second DCI. When the AL is small, a quantity of occupied control channel elements (control channel element, CCE) is small, so that PDCCH resource overheads can be reduced.

In a possible design, a blind detection count of PDCCH candidates in the first PDCCH candidate set is determined based on the preset total quantity. In comparison with the conventional technology in which blind detection needs to be performed on all the PDCCH candidates in the first PDCCH candidate set, in this application, after the second PDCCH candidate set is determined, the quantity of PDCCH candidates in the second PDCCH candidate set may be used as the blind detection count of the first PDCCH candidate set, so that complexity of performing blind detection on the PDCCH candidate on the terminal device side can be reduced.

In a possible design, the PDCCH candidates in the second PDCCH candidate set are PDCCH candidates corresponding to the first preset level quantity of ALs obtained by sorting, in ascending order of ALs, the ALs in the first PDCCH candidate set that are greater than or equal to the first AL. A quantity of PDCCH candidates corresponding to any AL in the second PDCCH candidate set does not exceed a preset quantity corresponding to the AL. When the quantity of PDCCH candidates corresponding to any AL does not exceed the preset quantity corresponding to the AL, quantities of PDCCH candidates corresponding to different ALs may be the same or may be different. In this way, when some PDCCH candidates at small ALs in the first PDCCH candidate set are selected and a quantity of PDCCH candidates at each AL is limited, complexity of monitoring the second DCI on the terminal device side can be reduced, PDCCH resource overheads can be reduced, and flexibility of performing multi-cell scheduling on the network side can be ensured.

In a possible design, a blind detection count of PDCCH candidates in the first PDCCH candidate set is determined based on the preset level quantity and a preset quantity corresponding to each AL in the second PDCCH candidate set. In this way, PDCCH resource overheads when the terminal device performs blind detection on the PDCCH candidate can also be reduced.

In a possible design, a quantity of ALs of PDCCH candidates in the second PDCCH candidate set is less than or equal to a preset level quantity. In this way, when PDCCH candidates corresponding to some ALs in the first PDCCH candidate set are selected, complexity of monitoring the second DCI on the terminal device side can be reduced, PDCCH resource overheads can be reduced, and flexibility of performing multi-cell scheduling on the network side can be ensured.

In a possible design, PDCCH candidates in the second PDCCH candidate set are PDCCH candidates corresponding to the first preset level quantity of ALs obtained by sorting, in ascending order of ALs, the ALs in the first PDCCH candidate set that are greater than or equal to the first AL. In this way, when a PDCCH candidate corresponding to a small AL in the first PDCCH candidate set is selected, complexity of monitoring the second DCI on the terminal device side can be reduced, PDCCH resource overheads can be reduced, and flexibility of performing multi-cell scheduling on the network side can be ensured.

In a possible design, a blind detection count of PDCCH candidates in the first PDCCH candidate set is determined based on the preset level quantity. To be specific, the blind detection count of the PDCCH candidates in the first PDCCH candidate set by UE may be a sum of quantities of PDCCH candidates at the first preset level quantity of ALs obtained by sorting, in ascending order of ALs, the ALs in the first PDCCH candidate set that are greater than or equal to the first AL. In this way, PDCCH resource overheads when the terminal device performs blind detection on the PDCCH candidate can also be reduced.

In a possible design, a count of non-overlapping CCEs of the PDCCH candidates in the first PDCCH candidate set is determined based on a largest quantity of CCEs in quantities of CCEs respectively corresponding to a plurality of PDCCH candidate subsets that are obtained by traversing a plurality of possible monitoring results for carrying the first DCI, where all the plurality of PDCCH candidate subsets belong to the first PDCCH candidate set, and one of the plurality of PDCCH candidate subsets is the second PDCCH candidate set. In this way, when the terminal device monitors the second DCI, a corresponding CCE count does not change with a monitoring result for the first-level DCI, so that implementation complexity of the terminal device is reduced, and overheads of a PDCCH monitoring capability, that is, a CCE capability, are reduced.

In a possible design, the plurality of monitoring results for carrying the first DCI are a plurality of optional ALs of the PDCCH candidate carrying the first DCI; and the quantities of CCEs respectively corresponding to the plurality of PDCCH candidate subsets that are obtained by traversing the plurality of possible monitoring results for the first DCI include: quantities of CCEs respectively corresponding to the PDCCH candidate subsets that are obtained based on the plurality of optional ALs of the PDCCH candidate carrying the first DCI, the quantity of bits of the first DCI, and a plurality of possible quantities of bits of the second DCI and that correspond to each optional AL and each possible quantity of bits of the second DCI. In this way, the plurality of PDCCH candidate subsets are determined in the foregoing manner of determining the second PDCCH candidate set, and when a largest CCE count of the plurality of PDCCH candidate subsets is used as a CCE count of the first PDCCH candidate set, the CCE count of the first PDCCH candidate set may remain unchanged, so that implementation complexity of the UE is reduced.

In a possible design, a minimum time interval between the second DCI and a data channel scheduled by using the second DCI is determined based on a time interval between the first DCI and the second DCI. Because parsing of the second DCI can start only after parsing of the first DCI is completed, when the time interval between the second DCI and the first DCI is excessively small, parsing of the first DCI may not be completed. In this case, parsing of the second DCI needs to be delayed, and finally, a scheduling timing delay is caused. In this application, the minimum time interval between the second DCI and the data channel can flexibly change with the time interval between the first DCI and the second DCI, so that parsing of the second DCI and transmitting configuration of the data channel can be completed within the minimum time interval between the second DCI and the data channel, to increase a transmission success rate of the data channel.

In a possible design, a first minimum time interval is a minimum time interval between the second DCI and the data channel when the time interval between the first DCI and the second DCI is greater than or equal to a threshold; a second minimum time interval is a minimum time interval between the second DCI and the data channel when the time interval between the first DCI and the second DCI is less than the threshold; and the first minimum time interval is less than the second minimum time interval. In other words, when the time interval between the first DCI and the second DCI is small, the minimum time interval between the second DCI and the data channel may be appropriately extended, to increase a parsing success rate of the two levels of DCI, so as to increase a transmission success rate of the data channel.

According to a third aspect, a communication apparatus is provided. The communication apparatus may be a terminal device. The communication apparatus includes: a receiving unit, configured to receive indication information, where the indication information indicates a first physical downlink control channel candidate PDCCH candidate set, where the receiving unit is further configured to receive first downlink control information DCI; and the receiving unit is further configured to monitor second DCI on a second PDCCH candidate set, where the second PDCCH candidate set is determined based on the first DCI, and the second PDCCH candidate set belongs to the first PDCCH candidate set.

According to a fourth aspect, a communication apparatus is provided. The communication apparatus may be a network side device, for example, a radio access network device, and the communication apparatus includes: a sending unit, configured to send indication information, where the indication information indicates a first PDCCH candidate set, where the sending unit is further configured to send first DCI, where the first DCI indicates a second PDCCH candidate set, and the second PDCCH candidate set belongs to the first PDCCH candidate set; and the sending unit is further configured to send second DCI on the second PDCCH candidate set.

According to a fifth aspect, a communication apparatus is provided. The communication apparatus provided in this application has a function of implementing behavior of a network device in any one or more of the first aspect, the second aspect, and the possible implementations of the aspects, and includes a corresponding means (means) configured to perform steps or functions described in the foregoing method aspects. The steps or the functions may be implemented by using software, hardware, or a combination of hardware and software.

In a possible design, the apparatus includes one or more processors, and further, may include a communication unit. The one or more processors are configured to support the apparatus in performing a corresponding function of the network device in the foregoing methods, for example, determining a second PDCCH candidate set. The communication unit is configured to support the apparatus in communicating with another device, to implement a receiving and/or sending function, for example, sending first DCI or second DCI.

Optionally, the communication apparatus may further include one or more memories. The memory is configured to be coupled to the processor, and store program instructions and/or data necessary for a network device. The one or more memories may be integrated with the processor, or may be disposed independent of the processor. This is not limited in this application.

The communication apparatus may be a base station, a gNB, a transmit-receive point (transmission and reception point, transmit-receive point), a centralized unit (centralized unit, CU)/distributed unit (distributed unit, DU), or the like. The communication unit may be a transceiver or a transceiver circuit. Optionally, the transceiver may alternatively be an input/output circuit or an interface.

The communication apparatus may alternatively be a chip. The communication unit may be an input/output circuit or an interface of the chip.

In another possible design, the communication apparatus includes a processor which is coupled to a memory. The memory is configured to store a computer program, and the processor is configured to run the computer program in the memory, so that the apparatus performs the method completed by the network device in any one of the second aspect or the possible implementations of the second aspect. Further, the apparatus may further include a transceiver, configured to perform sending and/or receiving under control of the processor.

In a possible design, the apparatus includes one or more processors, and further, may include a communication unit. The one or more processors are configured to support the apparatus in performing a corresponding function of the terminal device in the foregoing method, for example, determining a second PDCCH candidate set. The communication unit is configured to support the apparatus in communicating with another device, to implement a receiving and/or sending function, for example, receiving first DCI or second DCI.

Optionally, the communication apparatus may further include one or more memories. The memory is coupled to the processor, and stores program instructions and/or data necessary for the apparatus. The one or more memories may be integrated with the processor, or may be disposed independent of the processor. This is not limited in this application.

The communication apparatus may be a terminal device, UE, an intelligent terminal, a wearable device, or the like, and the communication unit may be a transceiver or a transceiver circuit. Optionally, the transceiver may alternatively be an input/output circuit or an interface.

The communication apparatus may be a chip. The communication unit may be an input/output circuit or an interface of the chip.

In another possible design, the apparatus includes a processor, and the processor is coupled to a memory. The memory is configured to store a computer program, and the processor is configured to run the computer program in the memory, so that the apparatus performs the method completed by the terminal device in any one of the first aspect or the possible implementations of the first aspect.

According to a sixth aspect, a communication system is provided. The communication system may include a network device (a radio access device) and at least one terminal device in any possible implementation of any one of the foregoing aspects. The electronic device and the network device may perform the control channel transmission method in any one of the foregoing aspects and the possible implementations.

According to a seventh aspect, an embodiment of this application provides a computer-readable storage medium, including computer instructions. When the computer instructions are run on an electronic device, the electronic device is caused to perform the control channel transmission method in any one of the foregoing aspects and the possible implementations.

According to an eighth aspect, an embodiment of this application provides a computer program product. When the computer program product runs on a computer or a processor, the computer or the processor is caused to perform the control channel transmission method in any one of the foregoing aspects and the possible implementations.

It may be understood that any terminal device, network device, communication apparatus, computer-readable storage medium, computer program product, or the like provided above may be used in the corresponding method provided above. Therefore, for beneficial effects that can be achieved by the communication device, electronic device, chip, computer-readable storage medium, computer program product, or the like, refer to beneficial effects in the corresponding method. Details are not described herein again.

These aspects or other aspects in this application are more concise and comprehensible in the following descriptions.

## BRIEF DESCRIPTION OF DRAWINGS

FIG. 1 is a diagram of one control resource set being associated with two search space sets according to an embodiment of this application;

FIG. 2 is a diagram of a plurality of overbooking scenarios according to an embodiment of this application;

FIG. 3 is a diagram of time from an end of a last symbol of a PDCCH for scheduling a PUSCH to a start moment of a 1st uplink symbol of the corresponding PUSCH according to an embodiment of this application;

FIG. 4 is a diagram of an architecture of a communication system according to an embodiment of this application;

FIG. 5 is a schematic flowchart of a control channel transmission method according to an embodiment of this application;

FIG. 6 is a diagram of one search space set search space set according to an embodiment of this application;

FIG. 7 is a diagram of a PDCCH candidate in a second PDCCH candidate set according to an embodiment of this application;

FIG. 8 is a diagram of a second PDCCH candidate set determined when a preset total quantity is 1/2/3 and an AL for carrying first DCI is an AL 1 or an AL 2 according to an embodiment of this application;

FIG. 9 is a diagram of a time domain relationship between first DCI and a first PDCCH candidate set according to an embodiment of this application;

FIG. 10 is a diagram of a plurality of possible scenarios of determining a count of non-overlapping CCEs of a PDCCH candidate in a first PDCCH candidate set according to an embodiment of this application;

FIG. 11 is a flowchart of a method for scheduling a PUSCH by a base station by using two levels of DCI according to an embodiment of this application;

FIG. 12 is a diagram of a minimum time interval when a base station schedules a PUSCH by using two levels of DCI according to an embodiment of this application;

FIG. 13 is a diagram of a structure of a terminal device according to an embodiment of this application; and

FIG. 14 is a diagram of a structure of a network device according to an embodiment of this application.

## DESCRIPTION OF EMBODIMENTS

For ease of understanding, some concepts related to embodiments of this application are described for reference by using examples. Details are shown as follows:

1. Subcarrier spacing (subcarrier sapcing, SCS)

In new radio (new radio, NR), a plurality of SCSs are defined. An SCS corresponding to an SCS number $\mu$ is $2^{\mu} \cdot 15$ kHz. For example, SCSs whose numbers $\mu$ are 0 to 4 correspond to 15 kHz, 30 kHz, 60 kHz, 120 kHz, and 240 kHz, respectively. In NR, one resource block (resource block, RB) is defined as 12 consecutive subcarriers in frequency domain.

2. Carrier (carrier) and cell (cell)

The carrier (carrier) is a radio signal that is transmitted by a radio frequency device of a base station or a terminal and that has a specific frequency, bandwidth, and standard, that is, an electromagnetic wave, which is a subject for carrying information in wireless mobile communication. A carrier used by the base station for sending is referred to as a downlink carrier, and a carrier used by the terminal for sending is referred to as an uplink carrier.

A cell is described from a perspective of resource management or mobility management by a higher layer (for example, a protocol layer above a physical layer such as a radio resource control layer or a media access control layer). A coverage area of each network device may be divided into one or more cells.

In a current NR standard, one downlink carrier may be configured for one cell. Optionally, one uplink carrier or two uplink carriers may be further configured for one cell. For a terminal device, a cell that provides a service for the terminal device may be referred to as a serving cell. A related cell in this application may be a serving cell.

3. Carrier aggregation and cross-carrier scheduling

To achieve high-speed transmission, a carrier aggregation (carrier aggregation, CA) mechanism is used in NR. A terminal that supports the CA may simultaneously perform data transmission on a plurality of carriers, to increase a data transmission rate.

Each carrier in the CA is also referred to as a member carrier or a component carrier (CC, Component Carrier).

A cell in which a physical downlink control channel (physical downlink control channel, PDCCH) corresponding to a data channel can be sent is referred to as a scheduling cell (scheduling cell), which is also referred to as an active scheduling cell; and a cell in which data channel transmission is performed is referred to as a scheduled cell (scheduled cell). User equipment (user equipment, UE) receives a PDCCH in the scheduling cell, and sends or receives data in the scheduled cell based on control information carried in the PDCCH.

A downlink carrier of a cell carries a control channel, to perform uplink and downlink data channel scheduling of the cell. The cell is a self-scheduling (self-scheduling) cell. The cell is both a scheduling cell and a scheduled cell.

In a plurality of cells of the CA, a downlink carrier of a cell carries a control channel for scheduling an uplink and downlink data channel of another cell. Herein, the cell carrying the control channel is referred to as a scheduling cell, and the cell carrying the uplink and downlink data channel is referred to as a scheduled cell. This scheduling mode is referred to as cross-carrier scheduling (cross carrier scheduling, CCS). One scheduling cell may correspond to a plurality of scheduled cells, that is, a control channel can be sent in one scheduling cell to perform data scheduling of a plurality of scheduled cells.

4. PDCCH

One PDCCH candidate (candidate) in NR may include L={1, 2, 4, 8, 16} control channel elements (control channel element, CCE). Herein, L is referred to as an aggregation level (aggregation level, AL) of the PDCCH candidate. One CCE includes six resource-element groups (resource-element groups, REGs), and each REG corresponds to one resource block (resource block, RB) on one orthogonal frequency-division multiplexing (orthogonal frequency-division multiplexing, OFD) symbol (symbol).

A PDCCH of UE may be sent or may not be sent on a PDCCH candidate. The UE may monitor the PDCCH candidate to determine whether there is a PDCCH sent to the UE.

A search space (search space) whose aggregation level is L is defined as a set of several PDCCH candidates whose sizes are L CCEs. A search space set (search space set) is a set of search spaces that includes different ALs. Sometimes, the search space is a general concept, and may be used for representing a search space, or may be used to represent a search space set, or may be used for representing a plurality of search space sets, or may be used for representing a type of search space set.

One search space set is associated with one control resource set (control resource set, CORESET). A control resource set is a concept introduced into NR. One control resource set is defined in one cell, and includes a group of consecutive or non-consecutive RBs in frequency domain and one, two, or three consecutive OFDM symbols in time domain.

5. Search space set

(1) Time domain parameter of the search space set

One search space set may be associated with only one control resource set, and one control resource set may be associated with a plurality of search space sets.

The search space set is configured with a time domain parameter such as a periodicity or an offset. Sizes and positions of a group of time-frequency resources corresponding to the search space set may be determined based on the time domain parameter of the search space set and a time-frequency resource parameter of the CORESET associated with the search space set.

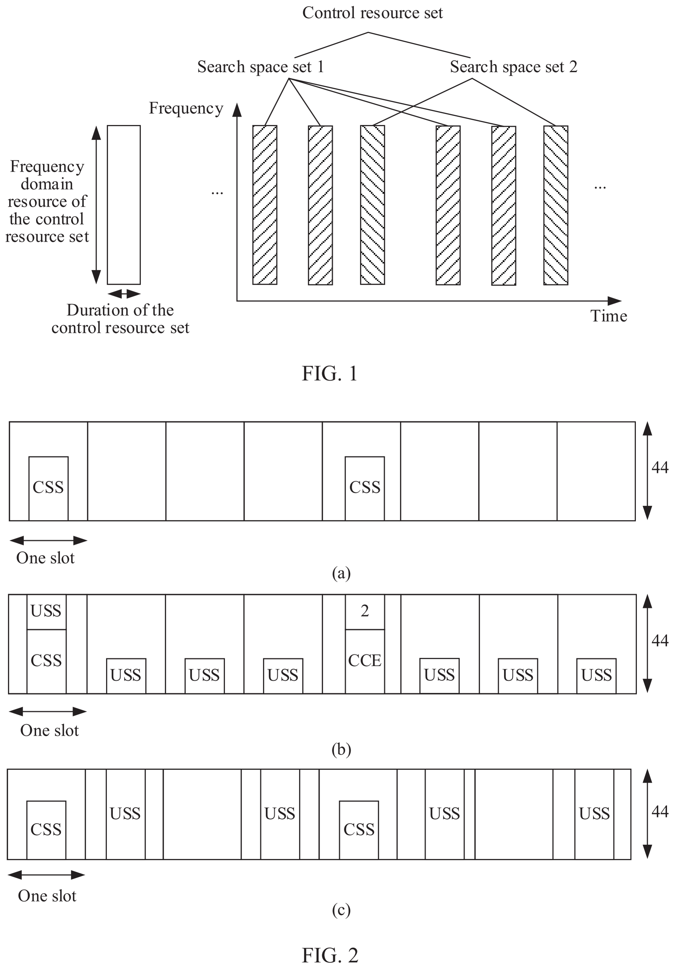

FIG. 1 is a diagram of one control resource set being associated with two search space sets (one control resource set being associated with a search space set 1 and a search space set 2). Sizes and positions of time-frequency resources respectively corresponding to the two search space sets may be determined based on a time-frequency resource parameter of the control resource set and time domain parameters of the two search space sets associated with the control resource set.

(2) PDCCH candidate configuration of the search space set

Configuration of the search space set includes ALs and a quantity of PDCCH candidates corresponding to each AL. Based on the configuration and the sizes and the positions of the time-frequency resources corresponding to the search space set as described above, a position of a time-frequency resource of a PDCCH candidate corresponding to the search space set may be determined by using a rule specified in a protocol.

(3) Type of the search space set

There are two types of search space sets: common search space (common search space, CSS) and UE-specific search space (UE-specific search space, USS).

A Type0-PDCCH CSS set, a Type0A-PDCCH CSS set, a Type1-PDCCH CSS set, and a Type2-PDCCH CSS set are configured only in a primary cell, and a Type3-PDCCH CSS set and the USS may be configured in the primary cell or a secondary cell.

6. PDCCH monitoring capability

Two tasks in PDCCH monitoring have great impact on implementation complexity of UE. One is a quantity of monitored PDCCH candidates, which is sometimes referred to as a blind detection (blind detection, BD) quantity, and the other is a quantity of non-overlapping control channel elements CCEs, which is sometimes referred to as a quantity of CCEs for short. A larger quantity of monitored PDCCH candidates indicates higher decoding complexity of the UE, and a larger quantity of non-overlapping CCEs indicates higher channel estimation complexity of the UE.

For each scheduled cell, a blind detection upper limit and a non-overlapping CCE upper limit, which are referred to as a BD/CCE upper limit for short, of a PDCCH candidate in unit time of a scheduling cell used for scheduling the scheduled cell may be determined in a manner specified in a protocol. The unit time may be several consecutive OFDM symbols, and specifically, may be a slot (slot) or a span (sapn).

For each scheduled cell, a BD quantity and a quantity of non-overlapping CCEs that correspond to a PDCCH candidate finally monitored by the UE do not exceed a BD/CCE upper limit of the scheduled cell that is determined in the manner specified in the protocol. If a scheduled cell is a secondary cell, a BD quantity and a quantity of non-overlapping CCEs that correspond to a PDCCH candidate configured by a base station do not exceed a BD/CCE upper limit of the scheduled cell that is determined in the manner specified in the protocol. If a scheduled cell is a primary cell, a BD quantity and a quantity of non-overlapping CCEs that correspond to a PDCCH candidate configured by the base station may exceed a BD/CCE upper limit of the scheduled cell that is determined in the manner specified in the protocol. The UE may delete some of these PDCCH candidates, to ensure that the BD quantity and the quantity of non-overlapping CCEs that correspond to the PDCCH candidate that needs to be finally monitored by the UE do not exceed the BD/CCE upper limit of the scheduled cell that is determined in the manner specified in the protocol. The following describes overbooking corresponding to the primary cell.

7. Overbooking

(1) Introduction of the overbooking

As described above, the Type0-PDCCH CSS set, the Type0A-PDCCH CSS set, the Type1-PDCCH CSS set, and the Type2-PDCCH CSS set are configured only in a primary cell, and PDCCH candidates in these CSSs may be used for sending important messages such as broadcast information. This is important. In addition, due to a requirement of a broadcast channel, a periodicity of the CSS may be large.

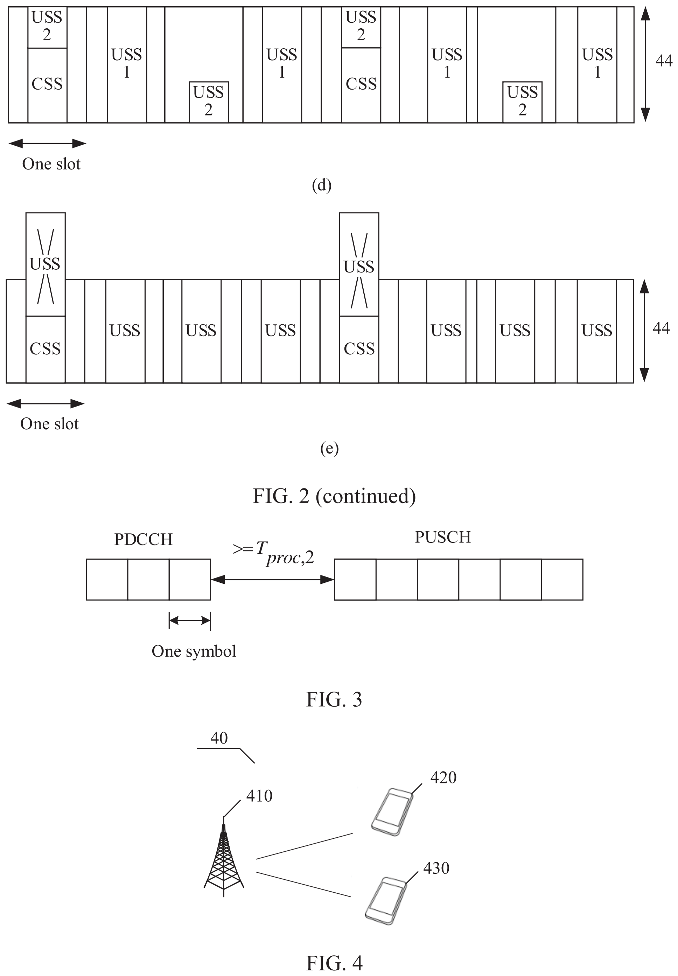

For example, a reason for introducing the overbooking is as follows. It is assumed that a blind detection (BD) upper limit of the primary cell in each slot is determined to be 44 in a manner specified in a protocol. FIG. 2 is a diagram of a plurality of overbooking scenarios. (a) in FIG. 2 is a diagram of assuming that a common search space CSS is configured in the primary cell, and a periodicity of the CSS is four slots (slots). If another USS needs to be configured for UE-spec scheduling in the primary cell, to ensure a scheduling opportunity, the USS may be expected to include a PDCCH candidate in each slot. If a periodicity of the USS is configured as one slot, as shown in (b) in FIG. 2, to ensure that a BD quantity in each slot does not exceed an upper limit, the BD quantity in the USS is small. In another solution, as shown in (c) in FIG. 2, the periodicity of the USS is set to two slots. As a result, there is no USS in some slots. Alternatively, as shown in (d) in FIG. 2, two USSs (USS 1 and USS 2) are set. In this method, a quantity of USSs is increased, and in some slots, there is still a problem that there are a small quantity of PDCCH candidates in the USSs.

To resolve this problem, it is specified in a protocol that, when an NR base station (next generation NodeB, gNB) performs configuration, a BD quantity/quantity of CCEs configured in some slots/spans may be greater than an upper limit. In this case, the UE needs to select, according to a protocol specification, some PDCCH candidates in the slots/spans for monitoring, to ensure that a BD quantity/quantity of CCEs for monitoring is less than or equal to the upper limit. As shown in (e) in FIG. 2, the UE performs determining in each slot. If a BD quantity in a current slot exceeds the upper limit of 44, some USSs may be discarded, to ensure that a BD quantity/quantity of CCEs that need to be used for monitoring is less than or equal to the upper limit of 44.

(2) Overbooking processing

First, quantities of PDCCH candidates and non-overlapping CCEs that are associated with a CSS used for monitoring are respectively subtracted from an upper limit of a quantity of PDCCH candidates monitored in one slot/span and an upper limit of a quantity of non-overlapping CCEs in one slot, to obtain two remaining total quantities, respectively.

For the USS, a search space with a smaller index has a higher priority. Quantities of PDCCH candidates and non-overlapping CCEs that are associated with each search space used for monitoring are respectively subtracted from the two remaining total quantities in ascending order of indexes. For a USS index, if two remaining total quantities obtained after subtraction are still greater than or equal to 0, a PDCCH candidate corresponding to the USS index may be monitored; or for the USS index, if at least one of the two remaining total quantities obtained after subtraction is less than 0, PDCCH candidates corresponding to the USS index and a search space with a USS index greater than the USS index do not need to be monitored.

After overbooking processing is performed, quantities of PDCCH candidates and non-overlapping CCEs that need to be monitored in the CSS in the primary cell and the USS in the primary cell for scheduling do not exceed the BD/CCE upper limit.

8. Downlink control information (downlink control information, DCI)

(1) Introduction to basic concepts of the DCI

In NR, a PDCCH carries the DCI. For example, DCI in a PDCCH for scheduling a physical downlink shared channel (physical downlink shared channel, PDSCH) may include indication information of a scheduled cell and two resource indicator fields of the PDSCH: control information such as a frequency domain resource assignment (frequency domain resource assignment) and a time domain resource assignment (time domain resource assignment). DCI in a PDCCH for scheduling a physical uplink shared channel (physical uplink shared channel, PUSCH) may include indication information of a scheduled cell and two resource indicator fields of the PUSCH: a frequency domain resource assignment, a time domain resource assignment, and the like.

(2) Size of the DCI

The size (size) of the DCI includes two understandings. A first understanding is a quantity of bits of a payload (payload) in the DCI, and a second understanding is a sum of a quantity of bits of a payload and a quantity of bits of a cyclic redundancy check (cyclic redundancy check, CRC). If padding (padding) is performed on information bits in the DCI, the quantity of bits of the payload (payload) is a sum of a quantity of the information bits and a quantity of padded information bits. If no padding (padding) is performed on the information bits in the DCI, the quantity of bits of the payload (payload) is the quantity of the information bits. In an NR system, for example, a bit (bit) width of the CRC is 24.

(3) Two levels of DCI

The two levels of DCI include first-level DCI and second-level DCI. The two pieces of DCI send different downlink scheduling information, to jointly complete PDSCH/PUSCH scheduling or another function. A quantity of information bits in the first-level DCI is usually fixed, and a quantity of information bits in the second-level DCI is usually variable. The two levels of DCI can save control channel resources, reduce PDCCH monitoring complexity of the UE, and the like.

Use of the two levels of DCI in a DCI format for multi-cell scheduling is currently being discussed. The DCI format for multi-cell scheduling is described below.

9. DCI format for multi-cell scheduling

(1) Scheduled-cell set

Currently, two new DCI formats are discussed in a standard. The two DCI formats may be used for simultaneously scheduling data transmission of two or more cells, and are referred to as DCI formats for multi-cell scheduling. Table 1 shows the two DCI formats.

Table 1

| DCI format (format) | Use |
|---|---|
| DCI format 0_3 | Scheduling a PUSCH on an uplink carrier of one or more cells |
| DCI format 1_3 | Scheduling PDSCHs on a downlink carrier of one or more cells |

One UE may be configured with one or more scheduled-cell sets, and a cell in each scheduled-cell set may perform multi-cell scheduling by using the DCI format 0_3/1_3 shown in Table 1.

For example, one UE is configured with two scheduled-cell sets, the first scheduled-cell set includes a cell 0, a cell 1, a cell 2, and a cell 3, and the second scheduled-cell set includes a cell 4, a cell 5, and a cell 6. The DCI format 0_3 may be used for scheduling one or more of the cell 0, the cell 1, the cell 2, and the cell 3 simultaneously; and the DCI format 1_3 may be used for scheduling one or more of the cell 4, the cell 5, and the cell 6 simultaneously.

One piece of DCI in the DCI format for multi-cell scheduling may be used for scheduling data transmission of a plurality of cells, but not all pieces of DCI in the DCI format for multi-cell scheduling are used for scheduling data transmission of a plurality of cells. An indicator field exists in one DCI format for multi-cell scheduling, indicating one or more scheduled cells scheduled by using the DCI currently, and the one or more scheduled cells are all cells in a scheduled-cell set corresponding to the DCI format for multi-cell scheduling.

Because multi-cell scheduling is to schedule a plurality of carriers on a plurality of cells, the DCI format for multi-cell scheduling is sometimes also referred to as a DCI format for multicarrier scheduling.

10. Processing time of a dynamically scheduled PUSCH

In NR, two user capabilities (a UE processing capability 1 and a UE processing capability 2) are defined for the processing time of the PUSCH (that is, time required from time when UE receives DCI for scheduling the PUSCH to time when the UE is prepared to transmit the PUSCH).

FIG. 3 is a diagram of time from an end of a last symbol of a PDCCH for scheduling a PUSCH to a start moment of a 1st uplink symbol (including a DMRS) of the corresponding PUSCH. The time from the end of the last symbol of the PDCCH for scheduling the PUSCH to the start moment of the 1st uplink symbol (including a DMRS) of the corresponding PUSCH is not less than $T_{proc,2} = \max((N_2 + d_{2,1})(2048 + 144) \cdot \kappa 2^{-\mu} \cdot T_c, d_{2,2})$. In other words, in a design, a terminal device needs to be capable of completing PDCCH receiving and information parsing and generating a corresponding PUSCH within $T_{proc,2}$, to meet a strictest scheduling requirement.

(1) N2 is determined by the UE based on $\mu$ and a processing capability of the UE according to Table 2 (UE processing capability 1) and Table 3 (UE processing capability 2). Herein, $\mu$ corresponds to a number of the one that is in a downlink subcarrier spacing and an uplink subcarrier spacing ($\mu_{DL}$, $\mu_{UL}$) and that results in a large Tproc,2.

(2) $\kappa = T_s/T_c = 64$. In the NR system, Tc is a time unit, and $T_c = 1/(\Delta f_{max} \cdot N_f)$. $\Delta f_{max} = 480 \cdot 10^3$ Hz and $N_f = 4096$. $\kappa$ represents a ratio of Ts to Tc, and takes a fixed value of $\kappa = T_s/T_c = 64$. $T_s = 1/(\Delta f_{ref} \cdot N_{f,ref})$, $\Delta f_{ref} = 15 \cdot 10^3$ Hz, and $N_{f,ref} = 2048$.

(3) If a 1st symbol of the PUSCH includes only a demodulation reference signal (demodulation reference signal, DMRS), d2,1=0. Otherwise, d2,1=1.

(4) $(N_2 + d_{2,1})(2048+144) \cdot \kappa 2^{-\mu} \cdot T_c$ corresponds to PDCCH parsing time and PUSCH preparation time when bandwidth part (bandwidth part, BWP) switching is not considered.

(5) If scheduling DCI triggers BWP switching, $d_{2,2}$ is equal to time of the BWP switching. Otherwise, $d_{2,2}=0$.

Table 2 PUSCH preparation time for the UE processing capability 1

| $\mu$ | PUSCH preparation time $N_2$ (symbol) |
|---|---|
| 0 | 10 |
| 1 | 12 |
| 2 | 23 |
| 3 | 36 |

Table 3 PUSCH preparation time for UE processing capability 2

| $\mu$ | PUSCH preparation time $N_2$ (symbol) |
|---|---|
| 0 | 5 |
| 1 | 5.5 |
| 2 | 11 for frequency range 1 (in frequency range 1) |

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

Generally, when two levels of DCI are used for scheduling at least one cell, UE needs to perform PDCCH detection on a plurality of PDCCH candidates that are for detecting first-level DCI that are configured by a network side. When receiving the first-level DCI, the UE performs PDCCH detection on a plurality of PDCCH candidates that are for detecting second-level DCI that are configured by the network side, to determine whether the second-level DCI can be received. If the UE receives the second-level DCI, the UE parses the second-level DCI based on a parsing result of the first-level DCI, to obtain a parsing result of the second-level DCI. The UE prepares PUSCH transmitting configuration, encoding, modulation, and the like based on the parsing result of the first-level DCI and the parsing result of the second-level DCI, and performs uplink transmitting at a PUSCH transmitting time point. It can be learned that, during detection of the two levels of DCI, the UE needs to perform detection on each level of DCI on a plurality of PDCCH candidates, and receiving complexity of the UE is high.

Therefore, embodiments of this application provide a control channel transmission method and a communication apparatus. In the method of this application, if a terminal device receives first-level DCI, the terminal device may determine, based on the first-level DCI, some PDCCH candidates from a PDCCH candidate set that is configured by a network side and that is used for detecting second-level DCI, to perform detection on the second-level DCI. In other words, at least one PDCCH candidate in the PDCCH candidate set that is configured by the network side and that is used for detecting the second-level DCI does not belong to the some PDCCH candidates, and the terminal device does not perform detection on the second-level DCI on the PDCCH candidate that does not belong to the some PDCCH candidates, but performs detection on the second-level DCI on a PDCCH candidate that belongs to the some PDCCH candidates.

This is equivalent to narrowing a range of PDCCH candidates for detecting the second-level DCI by the terminal device, so that complexity of detecting the second-level DCI by the terminal device is low. In addition, the some PDCCH candidates for detecting the second-level DCI are determined based on the first-level DCI, and the first DCI has been correctly received by the terminal device. If it is ensured that a bit rate of the first-level DCI is equivalent to that of the second-level DCI, the some determined PDCCH candidates for detecting the second-level DCI can ensure receiving performance of detecting the second-level DCI by the terminal device. In this way, receiving performance of the second-level DCI and scheduling flexibility on the network side are ensured, and complexity of receiving the second-level DCI by the terminal device is reduced.

FIG. 4 is a diagram of an architecture of a communication system to which an embodiment of this application is applied. As shown in FIG. 4, the communication system 40 includes a radio access network device 410 and at least one terminal device (a terminal device 420 and a terminal device 430 in FIG. 4). The terminal device is connected to the radio access network device in a wireless manner, and the radio access network device is connected to a core network device in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. The terminal device may be located at a fixed position, or may be mobile. FIG. 4 is merely a diagram. The communication system 40 may further include another network device, for example, may further include a wireless relay device and a wireless backhaul device, which are not shown in FIG. 4. A quantity of radio access network devices and a quantity of terminal devices included in the communication system 40 are not limited in embodiments of this application.

The radio access network device 410 is an access device that is used by the terminal device to access the communication system 40 in a wireless manner, and may be a base station NodeB, an evolved base station eNodeB, a base station in an NR mobile communication system, a base station in a future mobile communication system, an access node in a Wi-Fi (wireless fidelity) system, or the like. A specific technology used by the radio access network device 410 and a specific device form of the radio access network device 410 are not limited in embodiments of this application.

The terminal device may also be referred to as a terminal (terminal), UE, a mobile station (mobile station, MS), a mobile terminal (mobile terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land, and include an indoor or outdoor device, a handheld device, or a vehicle-mounted device; or may be deployed on water; or may be deployed on an airplane, a balloon, and a satellite in air. Application scenarios of the radio access network device and the terminal device are not limited in embodiments of this application.

This embodiment of this application is applicable to downlink signal transmission, uplink signal transmission, or device to device (device to device, D2D) signal transmission. For the downlink signal transmission, a sending device is the radio access network device, and correspondingly, a receiving device is the terminal device. For the uplink signal transmission, a sending device is the terminal device, and correspondingly, a receiving device is the radio access network device. For the D2D signal transmission, a sending device is a terminal device, and correspondingly, a receiving device is also a terminal device. A signal transmission direction is not limited in embodiments of this application.

Communication between the radio access network device 410 and the terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. Communication between the radio access network device and the terminal device and communication between terminal devices may be performed through a spectrum below a 6th generation mobile communication technology (6th generation mobile networks, 6G), or may be performed through a spectrum above the 6G, or may be performed through both the spectrum below the 6G and the spectrum above the 6G. Spectrum resources used by the radio access network device 410 and the terminal device are not limited in embodiments of this application.

The following describes embodiments of this application by using the foregoing communication system 40 and the foregoing solution overview.

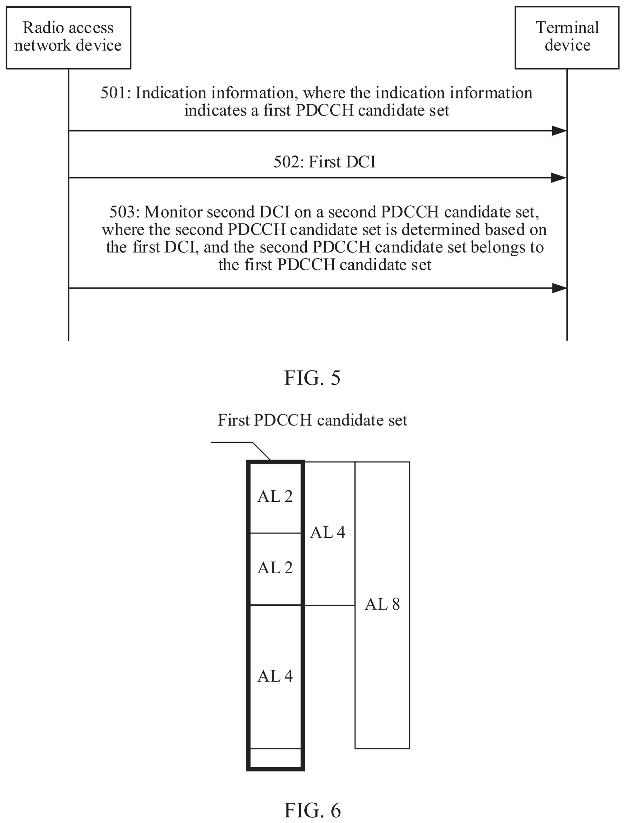

FIG. 5 is a schematic flowchart of a control channel transmission method according to an embodiment of this application. The method includes the following procedures.

501: A terminal device receives indication information, where the indication information indicates a first PDCCH candidate (candidate) set.

In this embodiment of this application, an example in which the terminal device is UE and a radio access network device is a base station is used for description.

That the terminal device receives the indication information may include that the terminal device receives indication information sent by the radio access network device. Correspondingly, the radio access network device sends the indication information, that is, the radio access network device sends the indication information to the terminal device.

For example, the base station may send a radio resource control (radio resource control, RRC) message to the UE, where the RRC message includes the indication information. The indication information includes an identifier of at least one AL, a quantity of PDCCH candidates corresponding to each AL, and the like. When the UE receives the indication information, the UE may determine, based on the indication information, an AL in the first PDCCH candidate set, a quantity of PDCCH candidates corresponding to each AL, and a time-frequency resource of each PDCCH candidate in the first PDCCH candidate set.

In some embodiments, a first-level DCI and a second-level DCI are used for scheduling data transmission of at least one cell. The first PDCCH candidate set is a PDCCH candidate set that is configured by the radio access network device on a scheduling cell and that is used for monitoring the second-level DCI.

In some embodiments, the first PDCCH candidate set may be configured in a form of a search space set, that is, a search space set. In other words, the indication information indicates the search space set. The first PDCCH candidate set is a PDCCH candidate set of the search space set within a time-frequency resource range of a first control resource set CORESET. In other words, the search space set includes a plurality of first PDCCH candidate sets, where the first CORESET is a CORESET associated with the search space set.

FIG. 6 is a diagram of a first PDCCH candidate set. The search space set includes two PDCCH candidates at an AL 2, two PDCCH candidates at an AL 4, and one PDCCH candidate at an AL 8 within a time-frequency region of one control resource set, which form one first PDCCH candidate set. In this application, an AL n represents that an aggregation level is n, where n is an integer greater than or equal to 2. To avoid covering, one PDCCH candidate at the AL 4 and one PDCCH candidate at the AL 8 shown in FIG. 6 are outside the control resource set. It should be understood that actually, the PDCCH candidate at the AL 4 and the PDCCH candidate at the AL 8 are also in the control resource set.

502: The terminal device receives first DCI.

Correspondingly, the radio access network device sends the first DCI.

In this embodiment of this application, the first DCI may be understood as the first-level DCI, and second DCI may be understood as the second-level DCI.

In some embodiments, the first DCI indicates a second PDCCH candidate set, the second PDCCH candidate set belongs to the first PDCCH candidate set, and the second PDCCH candidate set is used by the terminal device to monitor the second DCI.

For example, the base station may send the first DCI on a PDCCH candidate set configured for the first DCI, and the UE monitors the first DCI on the PDCCH candidate set configured for the first DCI. When detecting the first DCI, the UE may determine the second PDCCH candidate set from the first PDCCH candidate set based on the first DCI. The second PDCCH candidate set is different from the first PDCCH candidate set.

In some embodiments, the first DCI and the second DCI are used for scheduling data transmission of a first cell. The first DCI and the second DCI are not completely the same. Data transmission of the first cell cannot be performed based only on the first DCI, and data transmission of the first cell cannot be performed based only on the second DCI. The first DCI and the second DCI are further used for scheduling data transmission of a second cell, and the second cell is different from the first cell. Data transmission may be replaced with signal transmission.

In some embodiments, the first DCI and the second DCI are not completely the same. Data transmission on a first carrier cannot be performed based only on the first DCI, and data transmission on the first carrier cannot be performed based only on the second DCI. The first DCI and the second DCI are further used for scheduling data transmission on a second carrier. The second carrier is different from the first carrier. The first carrier and the second carrier may be an uplink carrier and a downlink carrier of a same cell, or may be uplink carriers of different cells, or may be downlink carriers of different cells.

503: The terminal device monitors the second DCI on the second PDCCH candidate set, where the second PDCCH candidate set is determined based on the first DCI, and the second PDCCH candidate set belongs to the first PDCCH candidate set.

Correspondingly, the radio access network device sends the second DCI on the second PDCCH candidate set. It should be noted that, before a radio access network device side sends the second DCI, the radio access network device side may also determine the second PDCCH candidate set based on the first PDCCH candidate set. An implementation may be similar to a method of the terminal device side determining the second PDCCH candidate set based on the first PDCCH candidate set.

The terminal device does not monitor the second DCI on a PDCCH candidate that is included in the first PDCCH candidate set but not included in the second PDCCH candidate set. Correspondingly, the radio access network device does not send the second DCI on the PDCCH candidate that is included in the first PDCCH candidate set but not included in the second PDCCH candidate set.

It should be noted that, even if the radio access network device does not send the second DCI, the terminal device monitors the second DCI on the second PDCCH candidate set, and a monitoring result is that the second DCI is not detected.

In some embodiments, the second PDCCH candidate set is determined based on an AL of a PDCCH candidate carrying the first DCI.

In other words, the terminal device determines the second PDCCH candidate set based on the AL of the PDCCH candidate carrying the first DCI, so that the terminal device monitors the second DCI on the second PDCCH candidate set.

In some embodiments, the second PDCCH candidate set is determined based on a quantity of bits of the first DCI, the AL of the PDCCH candidate carrying the first DCI, and a quantity of bits of the second DCI.

In other words, the terminal device determines the second PDCCH candidate set based on the quantity of bits of the first DCI, the AL of the PDCCH candidate carrying the first DCI, and the quantity of bits of the second DCI, so that the terminal device monitors the second DCI on the second PDCCH candidate set.

The quantity of bits of the first DCI may be obtained by the terminal device from a network side before the terminal device monitors the first DCI, and the AL of the PDCCH candidate carrying the DCI is an AL of a PDCCH candidate on which the terminal device detects the first DCI. In some embodiments, the first DCI includes an indication of the quantity of bits of the second DCI, that is, includes a size (size) of the second DCI.

In view of this, that the terminal device monitors the second DCI on the second PDCCH candidate set includes the following procedure.

(1) The terminal device determines the quantity of bits of the second DCI based on the first DCI.

For example, the first DCI may explicitly or implicitly indicate the quantity of bits of the second DCI. The explicit indication is that the first DCI includes an indicator field, and the indicator field directly indicates the quantity of bits of the second DCI. The implicit indication is that the first DCI includes one or more indicator fields, and/or carries information included in the PDCCH candidate on which the first DCI is detected, which may be used for determining the quantity of bits of the second downlink control information. For example, in a DCI format for multi-cell scheduling, the first DCI includes a scheduled-carrier group indicator field, and the UE determines the quantity of bits of the second DCI based on the scheduled-carrier group indicator field in the first DCI. Herein, a possible case is that, when the scheduled-carrier group indicator field in the first DCI indicates one scheduled carrier, the quantity of bits of the second DCI determined by the UE is small; or when the scheduled-carrier group indicator field in the first DCI indicates four scheduled carriers, the quantity of bits of the second DCI determined by the UE is large. For example, when there is one scheduled carrier, a corresponding quantity of bits of the second DCI is 40, or when there are four scheduled carriers, a corresponding quantity of bits of the second DCI is 100.

(2) The terminal device determines the second PDCCH candidate set from the first PDCCH candidate set based on the quantity of bits of the first DCI, the AL of the PDCCH candidate carrying the first DCI, and the quantity of bits of the second DCI.

In some embodiments, a PDCCH candidate in the second PDCCH candidate set is a PDCCH candidate that is in the first PDCCH candidate set and whose AL is greater than or equal to a first AL.

The first AL is determined based on the quantity of bits of the first DCI, the AL of the PDCCH candidate carrying the first DCI, and the quantity of bits of the second DCI.

For example, the second PDCCH candidate set includes at least one first PDCCH candidate, and an AL of the first PDCCH candidate is greater than or equal to the first AL.

When the base station configures a parameter a or presets a parameter a according to a protocol, the first AL may be determined with reference to a result of Formula 1. The first AL is a smallest AL greater than or equal to . A value of a may be less than 1, or may be greater than or equal to 1. Alternatively, a may not be configured by the network side or in the protocol, and the first AL may be determined with reference to a result of Formula 2. The first AL is a smallest AL greater than or equal to

$$\frac{\text{Quantity of the second DCI} \times \text{AL for carrying the first DCI}}{\text{Quantity of the first DCI}} \quad \text{(Formula 2)}$$

A calculation result of Formula 1 or Formula 2 may be an integer, or may be a decimal. When the calculation result is a decimal, the smallest AL may be obtained by rounding up. For example, based on a value range of the AL provided above, when the calculation result is 4, a value of the first AL is 4, and the first AL is represented by an AL 4; when the calculation result is 3, the value of the first AL is 4, and the first AL is represented by the AL 4; when the calculation result is 1.3, the value of the first AL is 2, and the first AL is represented by an AL 2; and when the calculation result is 4.9, the value of the first AL is 8, and the first AL is represented by an AL 8.

When the smallest AL determined according to Formula 1 or Formula 2 is not within the value range of the AL, the first AL may be a largest AL in a system. For example, a largest value of the AL in an NR system is 16. When the determined smallest AL is not within the value range of the AL, the first AL is 16, and is represented by an AL 16.

For example, when the first AL is the AL 4, the PDCCH candidate in the second PDCCH candidate set is a PDCCH candidate that is in the first PDCCH candidate set and whose AL is greater than or equal to the AL 4.

The foregoing determining the range of the AL of the PDCCH candidate in the second PDCCH candidate set by using Formula 1 or Formula 2 is mainly to ensure that a bit rate of the first DCI is equivalent to that of the second DCI. Because the first DCI has been correctly received by the UE, if the PDCCH candidate in the second PDCCH candidate set for monitoring the second DCI is the PDCCH candidate that is in the first PDCCH candidate set and whose AL is greater than or equal to the first AL, the bit rate of the second DCI may be equivalent to that of the first DCI, to ensure receiving performance of the second DCI. In addition, blind detection complexity of monitoring the second DCI by the UE is also reduced. In other words, a PDCCH candidate that is in the first PDCCH candidate set and whose AL is less than the first AL may not be used for monitoring. In other words, the UE does not monitor the second DCI on a PDCCH candidate that does not belong to the second PDCCH candidate set but belongs to the first PDCCH candidate set. In other words, at least one PDCCH candidate in the first PDCCH candidate set does not belong to the second PDCCH candidate set.

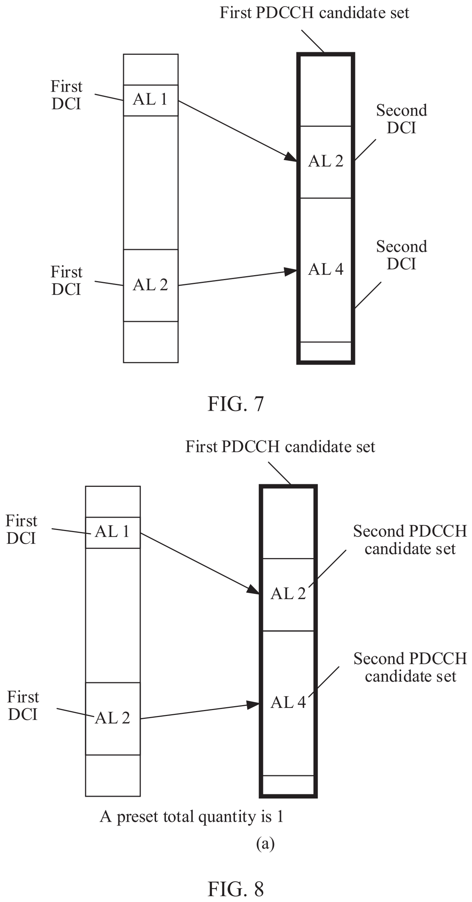

For example, it is assumed that the first PDCCH candidate set is the first PDCCH candidate set shown in FIG. 6. FIG. 7 is a diagram of PDCCH candidates in the second PDCCH candidate set. For example, according to a conventional technology, the UE may need to monitor five PDCCH candidates shown in FIG. 6. According to the solution of this application, when the second PDCCH candidate set includes one first PDCCH candidate, if the first DCI is carried on a PDCCH candidate at an AL 1, and the first AL is the AL 2, the UE may need to monitor only one PDCCH candidate at the AL 2. If the first DCI is carried on a PDCCH candidate at the AL 2, and the first AL is the AL 4, the UE may need to monitor only one PDCCH candidate at the AL 4. In other words, in this application, complexity of receiving the second DCI is reduced by reducing a quantity of PDCCH candidates used by the UE to monitor the second DCI.

In the foregoing embodiment, the second PDCCH candidate set is determined based on the quantity of bits of the first DCI, the AL of the PDCCH candidate carrying the first DCI, and the quantity of bits of the second DCI. In some other embodiments, the second PDCCH candidate set is determined based on the AL of the PDCCH candidate carrying the first DCI and a quantity of carriers scheduled by using the second DCI.

In other words, the terminal device determines the second PDCCH candidate set based on the AL of the PDCCH candidate carrying the first DCI and the quantity of carriers scheduled by using the second DCI, so that the terminal device monitors the second DCI on the second PDCCH candidate set.

The AL of the PDCCH candidate carrying the DCI is an AL of a PDCCH candidate on which the terminal device detects the first DCI.

In some embodiments, the first DCI includes an indication of the quantity of carriers scheduled by using the second DCI.

In view of this, that the terminal device monitors the second DCI on the second PDCCH candidate set includes the following procedure.

(1) The terminal device determines, based on the first DCI, the quantity of carriers scheduled by using the second DCI.

For example, in a DCI format for multi-cell scheduling, the first DCI includes a scheduled-carrier group indicator field, and the UE determines, based on the scheduled-carrier group indicator field in the first DCI, the quantity of carriers scheduled by using the second DCI. Herein, a possible case is that the scheduled-carrier group indicator field includes a bit (bit) map, and each bit corresponds to one carrier. When a value of a bit is 1, it indicates that the second DCI is used for scheduling a carrier corresponding to the bit. When a value of a bit is 0, it indicates that the second DCI is not used for scheduling a carrier corresponding to the bit. A quantity of bits whose bit value is 1 is the quantity of carriers scheduled by using the second DCI.

(2) The terminal device determines the second PDCCH candidate set from the first PDCCH candidate set based on the AL on the PDCCH candidate carrying the first DCI and the quantity of carriers scheduled by using the second DCI.

In some embodiments, a PDCCH candidate in the second PDCCH candidate set is a PDCCH candidate that is in the first PDCCH candidate set and whose AL is greater than or equal to a first AL.

The first AL is determined based on the AL on the PDCCH candidate carrying the first DCI and the quantity of carriers scheduled by using the second DCI.

For example, the second PDCCH candidate set includes at least one first PDCCH candidate, and an AL of the first PDCCH candidate is greater than or equal to the first AL.

When the base station configures a parameter a or presets a parameter a according to a protocol, the first AL may be determined with reference to a result of Formula 3. The first AL is a smallest AL greater than or equal to

$$\frac{a \times \text{Quantity of carriers scheduled by using the second DCI} \times \text{AL for carrying the first DCI}}{\text{Quantity of carriers scheduled by using the first DCI}} \quad \text{(Formula 3)}.$$

A value of a may be less than 1, or may be greater than or equal to 1. Alternatively, a may not be configured by the network side or in the protocol, and the first AL may be determined with reference to a result of Formula 4. The first AL is a smallest AL greater than or equal to

$$\frac{\text{Quantity of carriers scheduled by using the second DCI} \times \text{AL for carrying the first DCI}}{\text{Quantity of carriers scheduled by using the first DCI}} \quad \text{(Formula 4)}.$$

A calculation result of Formula 3 or Formula 4 may be an integer, or may be a decimal. When the calculation result is a decimal, the smallest AL may be obtained by rounding up. For a specific example, refer to the foregoing example of the value of the first AL according to the calculation result of Formula 1/Formula 2.

In some embodiments, in addition to the first PDCCH candidate, the second PDCCH candidate set further includes another PDCCH candidate, and ALs of all PDCCH candidates in the second PDCCH candidate set are greater than or equal to the first AL. In this way, when the second PDCCH candidate set includes a plurality of PDCCH candidates, scheduling flexibility of the base station can be ensured, and PDCCH blocking during scheduling of a plurality of UEs can be avoided.

When the second PDCCH candidate set includes a plurality of PDCCH candidates, for a manner in which the UE determines the second PDCCH candidate set, refer to the following two solutions. However, this is not limited to the following two solutions. Solution 1: A quantity of PDCCH candidates in the second PDCCH candidate set is less than or equal to a preset total quantity. For example, the quantity of PDCCH candidates in the second PDCCH candidate set is configured by the base station or preset in the protocol as or to the preset total quantity. The preset total quantity is less than a quantity of PDCCH candidates in the first PDCCH candidate set. The UE needs to determine the preset total quantity of PDCCH candidates from the first PDCCH candidate set.

For Solution 1, two possible implementations are provided herein.

Manner 1: The PDCCH candidates in the second PDCCH candidate set are the first preset total quantity of PDCCH candidates obtained by sorting, in ascending order of ALs, PDCCH candidates that are in the first PDCCH candidate set and whose ALs are greater than or equal to the first AL.

In this way, in the second PDCCH candidate set determined from the first PDCCH candidate set, a PDCCH candidate at a small AL in PDCCH candidates that meet receiving performance of the second DCI may be used, to reduce PDCCH resource overheads.

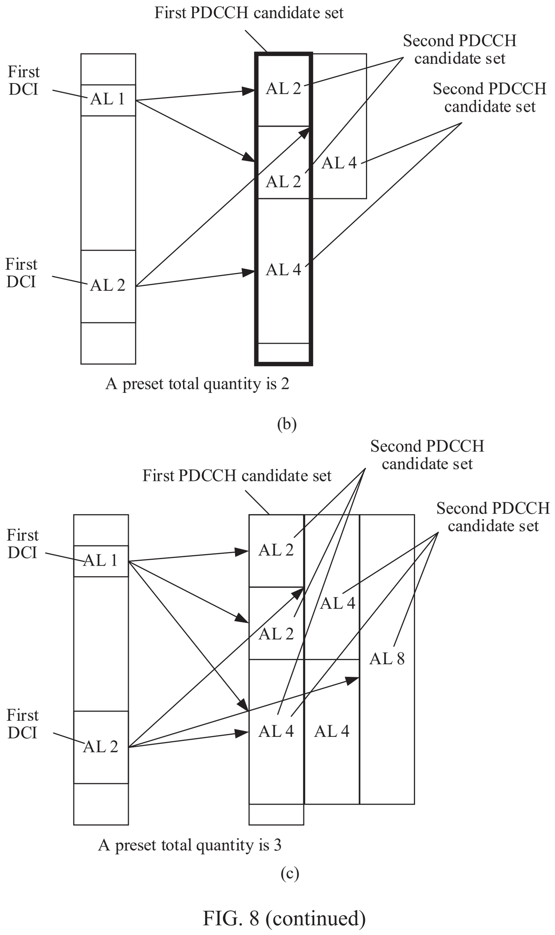

For example, FIG. 8 is a diagram of a second PDCCH candidate set determined when the preset total quantity is 1/2/3 and an AL for carrying the first DCI is an AL 1 or an AL 2. An example in which the first PDCCH candidate set is the first PDCCH candidate set shown in FIG. 6 is still used. As shown in (a) in FIG. 8, when the AL for carrying the first DCI is the AL 1, if the first AL is the AL 2, and the preset total quantity is 1, the second PDCCH candidate set includes one PDCCH candidate that is in the first PDCCH candidate set and whose AL is the AL 2. If the first PDCCH candidate set includes a plurality of PDCCH candidates whose ALs are the AL 2, the UE may select any PDCCH candidate whose AL is the AL 2 or determine, according to a rule, one PDCCH candidate whose AL is the AL 2. Similarly, when the AL for carrying the first DCI is the AL 2, if the first AL is an AL 4, and the preset total quantity is 1, the second PDCCH candidate set includes one PDCCH candidate that is in the first PDCCH candidate set and whose AL is the AL 4. If the first PDCCH candidate set includes a plurality of PDCCH candidates whose ALs are the AL 4, the UE may select any PDCCH candidate whose AL is the AL 4 or determine, according to a rule, one PDCCH candidate whose AL is the AL 4.

As shown in (b) in FIG. 8, when the AL for carrying the first DCI is the AL 1, if the first AL is the AL 2, and the preset total quantity is 2, the second PDCCH candidate set includes two PDCCH candidates that are in the first PDCCH candidate set and whose ALs are the AL 2. When the AL for carrying the first DCI is the AL 2, if the first AL is the AL 4, and the preset total quantity is 2, the second PDCCH candidate set includes two PDCCH candidates that are in the first PDCCH candidate set and whose ALs are the AL 4.

As shown in (c) in FIG. 8, when the AL for carrying the first DCI is the AL 1, if the first AL is the AL 2, and the preset total quantity is 3, the second PDCCH candidate set includes two PDCCH candidates whose ALs are the AL 2 and one PDCCH candidate whose AL is the AL 4 in the first PDCCH candidate set. When the AL for carrying the first DCI is the AL 2, if the first AL is the AL 4, and the preset total quantity is 3, the second PDCCH candidate set includes two PDCCH candidates whose ALs are the AL 4 and one PDCCH candidate whose AL is an AL 8 in the first PDCCH candidate set.

It should be noted that a quantity of PDCCH candidates that are in the first PDCCH candidate set and whose ALs are greater than or equal to the first AL may be less than the preset total quantity. In this case, a determined quantity of PDCCH candidates in the second PDCCH candidate set is less than the preset total quantity.

In some embodiments, a blind detection count of PDCCH candidates in the first PDCCH candidate set is determined based on the preset total quantity. A blind detection count of PDCCH candidates in the first PDCCH candidate set for the second DCI is the preset total quantity. If the first PDCCH candidate may further carry other DCI in addition to the second DCI, the blind detection count of the DCCH candidates in the first PDCCH candidate set is determined based on a blind detection count of PDCCH candidates for the other DCI and the blind detection count of the PDCCH candidates for the second-level DCI. For example, the blind detection count of the DCCH candidates in the first PDCCH candidate set is a sum of the blind detection count of the PDCCH candidates for the other DCI and the blind detection count of the PDCCH candidates for the second-level DCI.

If the UE needs to perform overbooking processing, the UE may use the blind detection count of the first PDCCH candidate set that is determined based on the preset total quantity.

Manner 2: The PDCCH candidates in the second PDCCH candidate set are PDCCH candidates corresponding to the first preset level quantity of ALs obtained by sorting, in ascending order of ALs, the ALs in the first PDCCH candidate set that are greater than or equal to the first AL.

A quantity of PDCCH candidates corresponding to any AL in the second PDCCH candidate set does not exceed a preset quantity corresponding to the AL.

The preset level quantity may be configured by the base station for the UE, or may be preset in a protocol. This is not limited in this application. The preset level quantity is a positive integer greater than or equal to 1. The preset quantity may be configured by the base station for the UE, or may be preset in the UE according to a protocol. This is not limited in this application.

In this application, the base station configures a parameter (for example, the preset level quantity, the preset quantity, or the preset total quantity in embodiments of this application) by using higher layer signaling in two configuration manners: explicit configuration and implicit configuration. The explicit configuration of the base station is to directly configure a value of a parameter. The implicit configuration of the base station is to specify in a protocol that the base station can explicitly configure a value of a parameter, but the base station does not configure the parameter in signaling that can be used for configuring the parameter, and in this case, it is specified in the protocol that it may be considered that the base station configures a default value, for example, 1.

For example, the preset quantity is configured by the base station for the UE, or a positive integer that is greater than or equal to 1 and that is preset in a protocol. A preset quantity corresponding to each AL in the second PDCCH candidate set is a same preset quantity. In other words, a quantity of PDCCH candidates at each AL in the second PDCCH candidate set is less than or equal to the preset quantity.

For example, an AL for carrying the first DCI is an AL 1, the first AL is an AL 2, the preset level quantity is 3, and the preset quantity is 1. An example in which the first PDCCH candidate set is the first PDCCH candidate set shown in FIG. 6 is used. The UE may determine, from the first PDCCH candidate set, one PDCCH candidate whose AL is the AL 2, one PDCCH candidate whose AL is an AL 4, and one PDCCH candidate whose AL is an AL 8.

In some embodiments, a blind detection count of PDCCH candidates in the first PDCCH candidate set is determined based on the preset level quantity and the preset quantity corresponding to each AL in the second PDCCH candidate set. A blind detection count of PDCCH candidates in the first PDCCH candidate set for the second DCI is the preset level quantity×the preset quantity. If the first PDCCH candidate may further carry other DCI in addition to the second DCI, the blind detection count of the DCCH candidates in the first PDCCH candidate set is determined based on a blind detection count of PDCCH candidates for the other DCI and the blind detection count of the PDCCH candidates for the second-level DCI. For example, the blind detection count of the DCCH candidates in the first PDCCH candidate set is a sum of the blind detection count of the PDCCH candidates for the other DCI and the blind detection count of the PDCCH candidates for the second-level DCI.

If the UE needs to perform overbooking processing, the UE may use the blind detection count of the first PDCCH candidate set that is determined based on the preset level quantity and the preset quantity.

For example, the preset quantity is independently configured by the base station for each AL in the second PDCCH candidate set, or is independently preset in a protocol for each AL in the second PDCCH candidate set. The preset quantity corresponding to each AL is a positive integer greater than or equal to 1, preset quantities corresponding to different ALs may be configured to be the same or different, and a quantity of PDCCH candidates at each AL in the second PDCCH candidate set is less than or equal to a preset quantity corresponding to the AL.

For example, the AL for carrying the first DCI is an AL 1, the first AL is an AL 2, the preset level quantity is 3, a preset quantity corresponding to the AL 2 is 1, a preset quantity corresponding to an AL 4 is 2, and a preset quantity corresponding to an AL 8 is 1. An example in which the first PDCCH candidate set is the first PDCCH candidate set shown in FIG. 6 is used. The UE may determine, from the first PDCCH candidate set, one PDCCH candidate whose AL is the AL 2, two PDCCH candidates whose ALs are the AL 4, and one PDCCH candidate whose AL is the AL 8.

In some embodiments, the blind detection count of the PDCCH candidates in the first PDCCH candidate set is determined based on the preset level quantity and the preset quantity corresponding to each AL in the second PDCCH candidate set.

For example, the blind detection count of the PDCCH candidates in the first PDCCH candidate set for the second DCI is a sum of preset quantities corresponding to all ALs in the second PDCCH candidate set. If the first PDCCH candidate may further carry other DCI in addition to the second DCI, the blind detection count of the DCCH candidates in the first PDCCH candidate set is determined based on a blind detection count of PDCCH candidates for the other DCI and the blind detection count of the PDCCH candidates for the second-level DCI, for example, a sum of the blind detection count of the PDCCH candidates for the other DCI and the blind detection count of the PDCCH candidates for the second-level DCI. If the UE needs to perform overbooking processing, the UE may use the blind detection count of the first PDCCH candidate that is determined based on the preset level quantity and the preset quantity corresponding to each AL in the second PDCCH candidate set.

Solution 2: A quantity of ALs of PDCCH candidates in the second PDCCH candidate set is less than or equal to a preset level quantity.

The preset level quantity may be configured by the base station or preset in the UE according to a protocol. To be specific, during determining of the second PDCCH candidate set, when an AL of a PDCCH candidate in the second PDCCH candidate set is greater than or equal to the first AL, PDCCH candidates corresponding to the preset level quantity of ALs in the first PDCCH candidate set are selected. For example, it is assumed that the first AL is 2, and the preset level quantity is 2. The UE needs to determine two ALs from the first PDCCH candidate set, and both the two ALs are greater than or equal to the AL 2. For example, the two ALs are two PDCCH candidates whose ALs are the AL 2 and two PDCCH candidates whose ALs are an AL 4 in the first PDCCH candidate set shown in FIG. 6.

In some embodiments, in Solution 2, the PDCCH candidates in the second PDCCH candidate set are PDCCH candidates corresponding to the first preset level quantity of ALs obtained by sorting, in ascending order of ALs, the ALs in the first PDCCH candidate set that are greater than or equal to the first AL.

For example, when the preset level quantity is 1, the UE selects, as the PDCCH candidates in the second PDCCH candidate set, all PDCCH candidates that are in the first PDCCH candidate set and whose ALs are the first AL. For example, the first AL is 2. In the first PDCCH candidate set shown in FIG. 6, the PDCCH candidates in the second PDCCH candidate set are the two PDCCH candidates that are in the first PDCCH candidate set and whose ALs are the AL 2.

When the preset level quantity is 2, the UE selects, as the PDCCH candidates in the second PDCCH candidate set, all PDCCH candidates that are in the first PDCCH candidate set and whose ALs are the first AL and the first AL$\times$2. For example, the first AL is 2. In the first PDCCH candidate set shown in FIG. 6, the PDCCH candidates in the second PDCCH candidate set are the two PDCCH candidates whose ALs are the AL 2 and the two PDCCH candidates whose ALs are the AL 4 in the first PDCCH candidate set.

When the preset level quantity is 3, the UE selects, as the PDCCH candidates in the second PDCCH candidate set, all PDCCH candidates that are in the first PDCCH candidate set and whose ALs are the first AL, the first AL$\times$2, and the first AL$\times$4. For example, the first AL is 4. In the first PDCCH candidate set shown in FIG. 6, the PDCCH candidates in the second PDCCH candidate set are the two PDCCH candidates whose ALs are the AL 4 and one PDCCH candidate whose AL is an AL 8 in the first PDCCH candidate set. Because the first PDCCH candidate set does not include a PDCCH candidate whose AL is an AL 16, the second PDCCH candidate set does not include the PDCCH candidate whose AL is the AL 16.

In other words, during selection of a PDCCH candidate from the first PDCCH candidate set according to Solution 2, some ALs may not exist. The foregoing example in which the preset level quantity is 3 is equivalent to discarding a PDCCH candidate at an AL that does not exist in the first PDCCH candidate set. This is a processing manner. For another example, when the preset level quantity is 2, when the PDCCH candidates that are in the first PDCCH candidate set and whose ALs are the first AL and the first AL$\times$2 need to be selected, if the PDCCH candidate whose AL is the first AL$\times$2 does not exist in the first PDCCH candidate set, only all PDCCH candidates that are in the first PDCCH candidate set and whose ALs are the first AL are selected as the PDCCH candidates in the second PDCCH candidate. In another processing manner, PDCCH candidates at the first AL and the first AL$\times$4 in the first PDCCH candidate set may alternatively be used as the PDCCH candidates in the second PDCCH candidate. In other words, an AL that does not exist is skipped, and a smallest AL greater than the AL that does not exist is used to continue to select a PDCCH candidate.

In some embodiments, in the manner of determining the second PDCCH candidate set in Solution 2, a blind detection count of PDCCH candidates in the first PDCCH candidate may be determined based on the preset level quantity. For example, a sum of quantities of PDCCH candidates corresponding to the preset level quantity of ALs that are in the first PDCCH candidate set and that are greater than or equal to the first AL is used as a blind detection count of PDCCH candidates in the first PDCCH candidate set for the second DCI. During overbooking processing, the blind detection count of the first PDCCH candidate set that is determined based on the preset level quantity may be used.

In this embodiment of this application, a relationship between the first PDCCH candidate set and the second PDCCH candidate set is further described herein.

In some embodiments, the monitoring the second DCI on the second PDCCH candidate set includes: when the first DCI is detected within a first time interval, monitoring the second DCI on the second PDCCH candidate set within the first time interval. This is because within the first time interval, there is a correspondence between the first DCI and the first PDCCH candidate set for monitoring the second DCI in time domain. For example, the first time interval may be one slot, or a plurality of slots, or one span, or a plurality of spans.

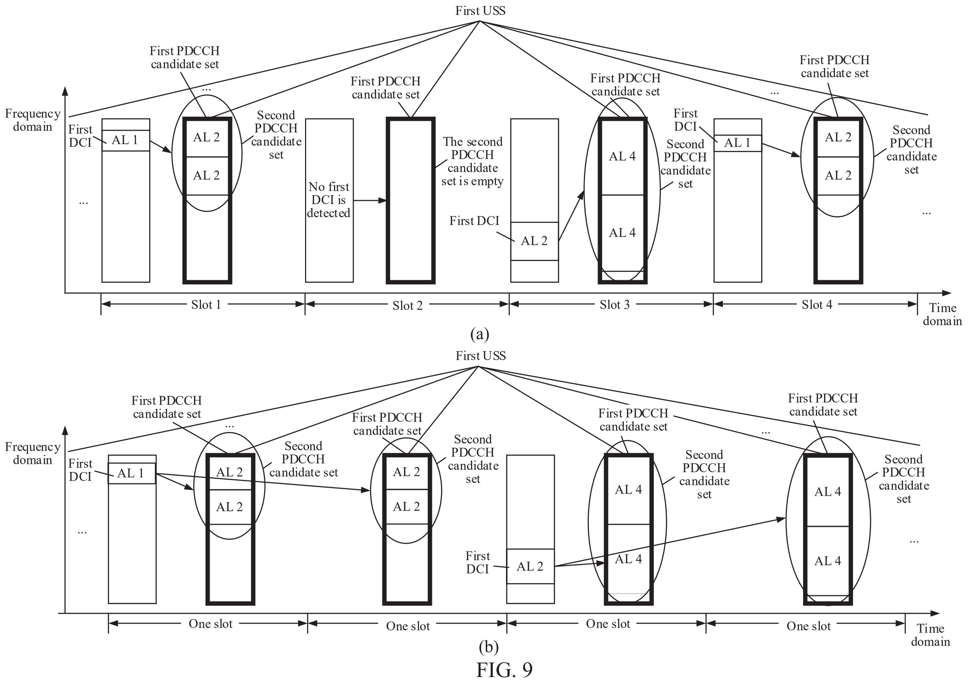

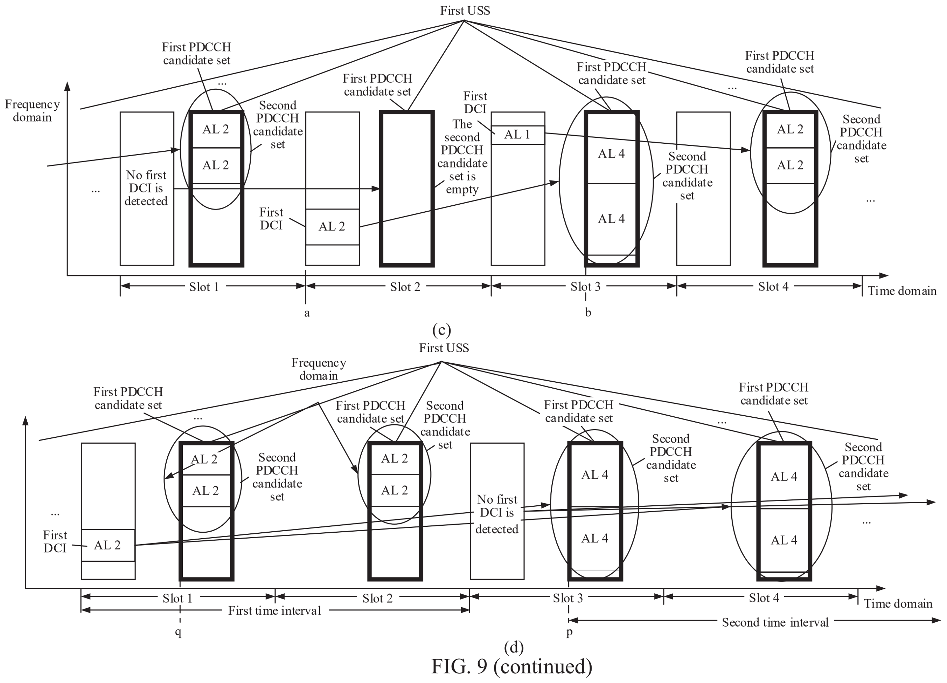

For example, FIG. 9 is a diagram of a time domain relationship between the first DCI and the first PDCCH candidate set. It is assumed that the base station configures a first USS, the first USS is associated with a first CORESET, and the first PDCCH candidate set is a PDCCH candidate set of the first USS within a time-frequency resource range of the first CORESET. In other words, the USS includes a plurality of first PDCCH candidate sets. When the UE detects one piece of first DCI, the first DCI may correspond to one or more to-be-monitored first PDCCH candidate sets. As shown in (a) in FIG. 9, when the first time interval is one slot, within one first time interval, one piece of first DCI corresponds to one first PDCCH candidate set used for monitoring the second DCI. In some scenarios, there may be more than two first PDCCH candidate sets within one first time interval. This is not limited in this application. As shown in (b) in FIG. 9, when the first time interval is two slots, within one first time interval, one piece of first DCI corresponds to two first PDCCH candidate sets used for monitoring the second DCI.

In other words, the first PDCCH candidate set may be understood as including all PDCCH candidates in one control resource set associated with the first USS. For example, the first PDCCH candidate set includes five PDCCH candidates shown in FIG. 6. The UE needs to determine the second PDCCH candidate set from each first PDCCH candidate set within each first time interval based on the first DCI received within the first time interval. If PDCCH candidates for detecting the first DCI are different within different first time intervals, the second PDCCH candidate set determined from the first PDCCH candidate set within the first time interval may also vary.

The time domain correspondence between the first DCI and the first PDCCH candidate set is configured by using higher layer signaling, or a time domain correspondence between a PDCCH candidate set for monitoring the first DCI and the first PDCCH candidate set is configured by using higher layer signaling.

Possible cases herein are as follows: (1) The UE monitors the first DCI on the first PDCCH candidate set. If the first DCI is detected, the UE determines the second PDCCH candidate set based on the quantity of bits of the first DCI, the quantity of bits of the second DCI, and the AL of the PDCCH candidate carrying the first DCI, and monitors the second DCI on the second PDCCH candidate set. For example, in the example shown in (a) in FIG. 9, the first time interval is one slot. When the first DCI is detected in a slot 1/slot 4, and the first DCI is carried on a PDCCH candidate at an AL 1, the second PDCCH candidate set is determined from the first PDCCH candidate set corresponding to the first DCI, and PDCCH candidates in the second PDCCH candidate set are two PDCCH candidates whose ALs are an AL 2. When the first DCI is not detected in a slot 2, the UE does not need to monitor the second DCI on the first PDCCH candidate set, and the second PDCCH candidate set is empty. When the first DCI is detected in a slot 3, and the first DCI is carried on a PDCCH candidate at the AL 2, the second PDCCH candidate set is determined from the first PDCCH candidate set corresponding to the first DCI, and PDCCH candidates in the second PDCCH candidate set are two PDCCH candidates whose ALs are an AL 4.

For another example, in the example shown in (b) in FIG. 9, when the first time interval is two slots, the first DCI is detected within a first time interval of a slot 1 and a slot 2, and the first DCI is carried on a PDCCH candidate at an AL 1, two second PDCCH candidate sets are determined from two first PDCCH candidate sets corresponding to the first DCI, and PDCCH candidates in each second PDCCH candidate set are two PDCCH candidates whose ALs are an AL 2. When the first DCI is detected within a first time interval of a slot 3 and a slot 4, and the first DCI is carried on a PDCCH candidate at the AL 2, two second PDCCH candidate sets are determined from the two first PDCCH candidate sets corresponding to the first DCI, and PDCCH candidates in each second PDCCH candidate set are two PDCCH candidates whose ALs are an AL 4.

(2) The base station configures another USS, that is, a second USS (PDCCH candidate set for monitoring the first DCI), and the UE needs to monitor the first DCI on the second USS. For example, in the example shown in (a) in FIG. 9, the base station configures that a time domain correspondence exists between the first USS and the second USS in one slot. To be specific, if the UE detects the first DCI on the second USS in a slot, the UE monitors the second DCI on the first USS (second PDCCH candidate set determined from the first PDCCH candidate set) corresponding to the second USS in the slot. Alternatively, in the example shown in (b) in FIG. 9, the base station configures a first time interval of the first USS as one slot and a first time interval of the second USS as two slots, and the base station configures that a time domain correspondence exists between the first USS and the second USS in the two slots. To be specific, if the UE detects the first DCI on the second USS in the two slots, the UE continues to monitor the second DCI on the first USS (second PDCCH candidate set determined from the first PDCCH candidate set) in the two slots, and the base station also sends the second DCI on the second PDCCH candidate set in the two slots. In addition, in some scenarios, the first DCI may alternatively be carried on the first PDCCH candidate set. In this case, the first time interval may be understood as a time domain resource range of the first PDCCH candidate set. The UE first monitors the first DCI on the first PDCCH candidate set, and after detecting the first DCI, determines the second PDCCH candidate set according to the method in the foregoing embodiment, and then monitors the second DCI on the second PDCCH candidate set.

In some embodiments, the monitoring the second DCI on the second PDCCH candidate set includes: when the first DCI is detected within the first time interval, monitoring the second DCI on the second PDCCH candidate set within a second time interval. There is a correspondence between the first DCI detected within the first time interval and the first PDCCH candidate set for monitoring the second DCI within the second time interval. The first time interval and the second time interval have different start time and a same time length. Start time of the second time interval is later than start time of the first time interval.

For example, the time lengths of the first time interval and the second time interval may be one slot, or a plurality of slots, or one span, or a plurality of spans. For example, an interval between the start time of the second time interval and the start time of the first time interval is one slot, or a plurality of slots, or one span, or a plurality of spans. For example, the time lengths of the first time interval and the second time interval are both one slot, and the start time of the second time interval is one slot later than the start time of the first time interval. For example, the time lengths of the first time interval and the second time interval are both two slots, and the start time of the second time interval is one slot later than that of the first time interval.

For example, FIG. 9 is a diagram of a time domain relationship between the first DCI and the first PDCCH candidate set. It is assumed that the base station configures a first USS, the first USS is associated with a first CORESET, and the first PDCCH candidate set is a PDCCH candidate set of the first USS within a time-frequency resource range of the first CORESET. In other words, the USS includes a plurality of first PDCCH candidate sets. When the UE detects one piece of first DCI, the first DCI may correspond to one or more to-be-monitored first PDCCH candidate sets.

As shown in (c) in FIG. 9, when the time length of the first time interval is one slot, the time length of the second time interval is one slot, and the start time of the second time interval is one slot later than the start time of the first time interval, within one second time interval, one piece of first DCI corresponds to one first PDCCH candidate set used for monitoring the second DCI. As shown in (c) in FIG. 9, a length of each of a slot 1, a slot 2, a slot 3, and a slot 4 is one slot. Start time b of the second time interval in the slot 3 is one slot later than start time a of the first time interval in the slot 2, and the first DCI in the slot 2 corresponds to the second DCI detected on the first PDCCH candidate set in the slot 3. In some scenarios, there may be more than two first PDCCH candidate sets within one first time interval. This is not limited in this application.

As shown in (d) in FIG. 9, when the time length of the first time interval is two slots, the time length of the second time interval is two slots, and the start time of the second time interval is two slots later than the start time of the first time interval, within one second time interval, one piece of first DCI corresponds to two first PDCCH candidate sets used for monitoring the second DCI. As shown in (d) in FIG. 9, a length of each of a slot 1, a slot 2, a slot 3, and a slot 4 is one slot. Start time p of the second time interval in the slot 3 is two slots later than start time q of the first time interval in the slot 1, and the first DCI in the slot 1 corresponds to the second DCI detected on the first PDCCH candidate set in the slot 3.

In this way, in this application, the second PDCCH candidate set is determined from the first PDCCH candidate set based on the first DCI, so that receiving performance of the second DCI is ensured, and blind detection complexity of detecting the second DCI by the UE can be reduced.

In other words, in comparison with the conventional technology in which all PDCCH candidates in the first PDCCH candidate set need to be monitored for monitoring the second DCI, in this application, a subset of the first PDCCH candidate set is determined based on a monitoring result of the first DCI to monitor the second DCI, and a quantity of PDCCH candidates for monitoring the second DCI by the UE is less than a total quantity of PDCCH candidates in the first PDCCH candidate set, so that blind detection complexity of monitoring the second DCI by the UE is low.

When the foregoing method procedure for determining the second PDCCH candidate set from the first PDCCH candidate set is applied, in this embodiment of this application, a count of non-overlapping CCEs of the PDCCH candidates in the first PDCCH candidate set may be further determined according to a method similar to the method procedure, so that when performing overbooking processing, the UE can perform overbooking processing based on the count of the non-overlapping CCEs of the PDCCH candidates in the first PDCCH candidate set.

In some embodiments, the count of the non-overlapping CCEs of the PDCCH candidates in the first PDCCH candidate set is determined based on a largest quantity of CCEs in quantities of CCEs respectively corresponding to a plurality of PDCCH candidate subsets that are obtained by traversing a plurality of possible monitoring results for carrying the first DCI. All the plurality of PDCCH candidate subsets belong to the first PDCCH candidate set, and one of the plurality of PDCCH candidate subsets is the second PDCCH candidate set.

In some embodiments, the plurality of monitoring results for carrying the first DCI are a plurality of optional ALs of the PDCCH candidate carrying the first DCI. The quantities of CCEs respectively corresponding to the plurality of PDCCH candidate subsets that are obtained by traversing the plurality of possible monitoring results for the first DCI include: quantities of CCEs respectively corresponding to the PDCCH candidate subsets that are obtained based on the plurality of optional ALs of the PDCCH candidate carrying the first DCI, the quantity of bits of the first DCI, and a plurality of possible quantities of bits of the second DCI and that correspond to each optional AL and each possible quantity of bits of the second DCI.

For example, herein, the count of the non-overlapping CCEs of the PDCCH candidates in the first PDCCH candidate set may be determined before the UE detects the first DCI. In this case, the UE does not determine an AL at which the first DCI is to be detected, and does not determine the quantity of bits of the second DCI. The UE may first determine a plurality of ALs in a PDCCH candidate set configured by the base station for monitoring the first DCI and the plurality of possible quantities of bits of the second DCI, establish a plurality of sets of data by using possible ALs for monitoring the first DCI and the plurality of possible quantities of bits of the second DCI, and determine the plurality of PDCCH candidate subsets based on the plurality of sets of data.

For example, the ALs in the PDCCH candidate set for monitoring the first DCI are an AL 2, an AL 4, and an AL 8, the quantity of bits of the second DCI may be 10 bits, 20 bits, and 30 bits, and the quantity of bits of the first DCI is 8 bits. During traversal, the UE needs to traverse 12 sets of data to obtain 12 PDCCH candidate subsets, that is, 12 CCE counts. For a manner of obtaining each PDCCH candidate subset through traversal calculation, refer to the foregoing manner of determining the second PDCCH candidate set.

Because different PDCCH candidate subsets correspond to different quantities of CCEs, a largest value in quantities of CCEs of all possible PDCCH candidate subsets is used as the count of the non-overlapping CCEs of the PDCCH candidates in the first PDCCH candidate set.

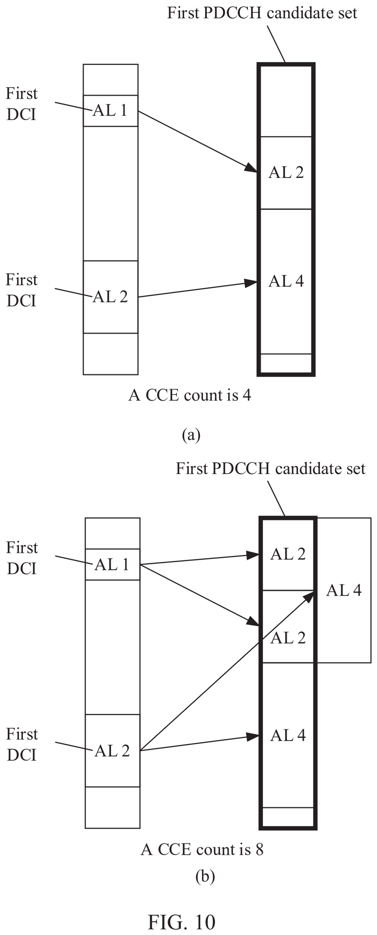

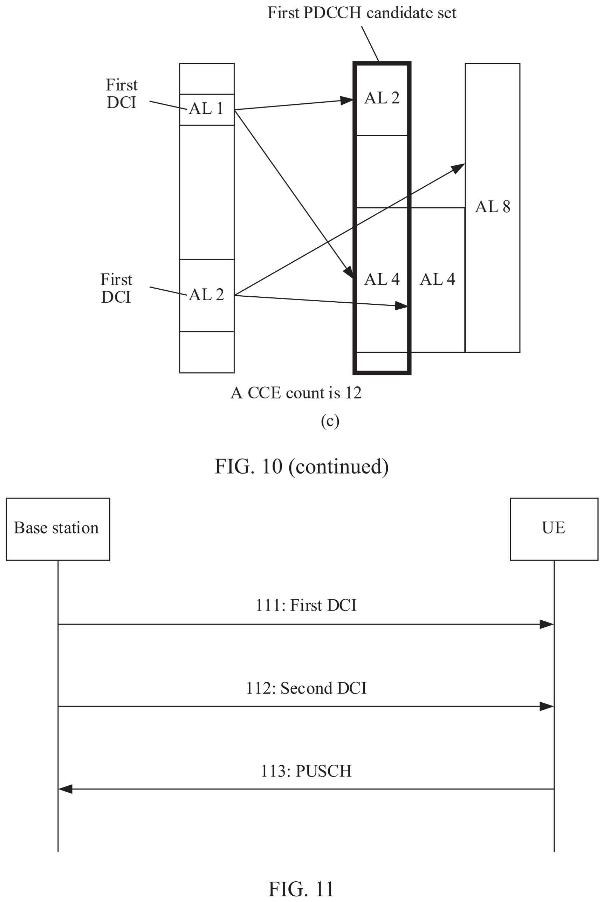

For example, it is assumed that the quantity of bits of the second DCI is known to the UE, for example, is configured by a higher layer. The UE needs to traverse a plurality of possible ALs for the first DCI, determines the plurality of PDCCH candidate subsets from the first PDCCH candidate set in a manner of determining the second PDCCH candidate set from the first PDCCH candidate set in the foregoing embodiment, and then determines the quantities of CCEs respectively corresponding to the plurality of PDCCH candidate subsets. FIG. 10 is a diagram of a plurality of possible scenarios of determining the count of the non-overlapping CCEs of the PDCCH candidates in the first PDCCH candidate set. As shown in (a) in FIG. 10, it is assumed that an AL for the first DCI may be an AL 1 or an AL 2. When the AL for the first DCI is the AL 1, a PDCCH candidate subset determined by the UE includes one PDCCH candidate whose AL is the AL 2, and a quantity of CCEs is 2. When the AL for the first DCI is the AL 2, a PDCCH candidate subset determined by the UE includes one PDCCH candidate whose AL is the AL 4, and a quantity of CCEs is 4. In this case, a larger quantity of CCEs in the quantities of CCEs respectively corresponding to the two PDCCH candidate subsets is 4. The count of the non-overlapping CCEs of the PDCCH candidates in the first PDCCH candidate set is 4.

As shown in (b) in FIG. 10, it is assumed that an AL for the first DCI may be an AL 1 or an AL 2. When the AL for the first DCI is the AL 1, a quantity of PDCCH candidates in a PDCCH candidate subset determined by the UE is 2, both ALs are the AL 2, and a quantity of CCEs in the PDCCH candidate subset is 4. When the AL for the first DCI is the AL 2, a quantity of PDCCH candidates in a PDCCH candidate subset determined by the UE is 2, both ALs are the AL 4, and a quantity of CCEs in the PDCCH candidate subset is 8. In this case, a larger quantity of CCEs in the quantities of CCEs respectively corresponding to the two PDCCH candidate subsets is 8. The count of the non-overlapping CCEs of the PDCCH candidates in the first PDCCH candidate set is 8.

As shown in (c) in FIG. 10, it is assumed that an AL for the first DCI may be an AL 1 or an AL 2. When the AL for the first DCI is the AL 1, a quantity of PDCCH candidates in a PDCCH candidate subset determined by the UE is 2, one is a PDCCH candidate whose AL is the AL 2, the other is a PDCCH candidate whose AL is an AL 4, and a quantity of CCEs in the PDCCH candidate subset is 6. When the AL for the first DCI is the AL 2, a quantity of PDCCH candidates in a PDCCH candidate subset determined by the UE is 2, one is a PDCCH candidate whose AL is the AL 4, the other is a PDCCH candidate whose AL is an AL 8, and a quantity of CCEs in the PDCCH candidate subset is 12. In this case, a larger quantity of CCEs in the quantities of CCEs respectively corresponding to the two PDCCH candidate subsets is 12. The count of the non-overlapping CCEs of the PDCCH candidates in the first PDCCH candidate set is 12.

In this way, for the UE, a CCE count for monitoring the second DCI by the UE does not change with the monitoring result of the first DCI, and receiving complexity of monitoring the second DCI by the UE is low.

It should be noted that, in a primary cell, if the first DCI and the second DCI are on different search space sets (or in different USSs, or on different PDCCH candidate sets), the UE needs to bind the two search space sets to perform overbooking processing. In some embodiments, when performing overbooking processing, the UE may monitor both or neither of the two search space sets. The UE does not monitor only a search space set corresponding to the first DCI without monitoring a search space set corresponding to the second DCI, or does not monitor only the search space set corresponding to the second DCI without monitoring the search space set corresponding to the first DCI. In other words, before a next first-DCI periodicity, the UE may determine, in advance based on a CCE count of the search space set of the first DCI and a CCE count of the search space set of the second DCI, whether to monitor the search space set corresponding to the first DCI and monitor the search space set corresponding to the second DCI. If a sum of the CCE count of the search space set corresponding to the first DCI and the CCE count of the search space set corresponding to the second DCI is greater than a CCE upper limit, the UE determines not to monitor the first DCI or the second DCI in the next first-DCI periodicity. On the contrary, if a sum of the CCE count of the search space set corresponding to the first DCI and the CCE count of the search space set corresponding to the second DCI is less than or equal to the CCE upper limit, the UE determines to monitor the first DCI and the second DCI in the next first-DCI periodicity. In this way, power consumption of monitoring the PDCCH candidate by the UE can be reduced, and CCE overheads are also reduced.

In some embodiments, an embodiment of this application further provides a method for scheduling a data channel by using two levels of DCI.

For example, FIG. 11 is a flowchart of a method of a base station scheduling a PUSCH by using two levels of DCI. The method includes the following procedure.

111: The base station sends first DCI to UE. Correspondingly, the UE receives the first DCI sent by the base station.

112: The base station sends second DCI to the UE. Correspondingly, the UE receives the second DCI sent by the base station.

113: The base station receives data that is carried on the PUSCH and that is sent by the UE. Correspondingly, the UE sends the data carried on the PUSCH to the base station.

After receiving the second DCI, the UE needs to determine a parsing result of the second DCI based on a parsing result of the first DCI, to perform PUSCH uplink transmitting configuration based on the parsing result of the first DCI and the parsing result of the second DCI, perform encoding and modulation processing on the data, and transmit the data on the PUSCH at a transmission time point of the PUSCH.

It can be learned from the foregoing that, when the two levels of DCI are used for scheduling the PUSCH, there is a minimum time interval between the second DCI and the PUSCH. For the UE, the UE does not expect that a time interval between the second DCI and a data channel is less than the minimum time interval. When the UE receives the second DCI, if the time interval between the second DCI and the data channel is less than the minimum time interval, the UE considers that the second DCI is invalid, or the UE does not process the data channel. For example, the UE does not send an uplink data channel scheduled by using the first DCI and the second DCI, or does not receive a downlink data channel scheduled by using the first DCI and the second DCI.

Currently, the minimum time interval is fixed. For the UE, after the UE receives the second DCI, the UE can start parsing the second DCI only after parsing of the first DCI is completed. In other words, the UE needs to parse the second DCI based on the parsing result of the first DCI. If the time interval between the second DCI and the first DCI is excessively small, when the UE receives the second DCI, parsing of the first DCI may not be completed. As a result, the UE may fail to parse the second DCI in time, and the second DCI fails to be parsed, causing a PUSCH scheduling failure. Alternatively, the UE needs to delay parsing of the second DCI, and consequently, a scheduling timing delay of the PUSCH is caused.

Therefore, in the method of scheduling the data channel by using the two levels of DCI in this application, a minimum time interval between the second DCI and the data channel scheduled by using the second DCI is determined based on the time interval between the first DCI and the second DCI. The data channel is, for example, a PUSCH/PDSCH/-channel state information-reference signal (channel state information-reference signal, CSI-RS).

In some embodiments, a first minimum time interval is a minimum time interval between the second DCI and the data channel when the time interval between the first DCI and the second DCI is greater than or equal to a threshold. A second minimum time interval is a minimum time interval between the second DCI and the data channel when the time interval between the first DCI and the second DCI is less than the threshold. The first minimum time interval is less than the second minimum time interval.

In other words, there are two scenarios.

Scenario 1: The time interval between the first DCI and the second DCI is greater than or equal to the threshold.

Scenario 2: The time interval between the first DCI and the second DCI is less than the threshold.

For example, the data channel is a PUSCH. When a time interval between the PUSCH scheduled by the base station and the second DCI is greater than or equal to a minimum time interval corresponding to a scenario, a minimum time interval between the second DCI and the PUSCH that corresponds to Scenario 1 is less than a minimum time interval between the second DCI and the PUSCH that corresponds to Scenario 2. A difference between the minimum time intervals in the two scenarios may be a value indicated by the base station or preset in a protocol, or may be related to the time interval between the first DCI and the second DCI. A smaller time interval between the first DCI and the second DCI indicates a larger difference; and a larger time interval between the first DCI and the second DCI indicates a smaller difference.

The time interval between the first DCI and the second DCI may be a time interval between a start/end moment of a $1^{st}$ symbol of the first DCI and a start/end moment of a $1^{st}$ symbol of the second DCI, or may be a time interval between a start/end moment of a last symbol of the first DCI and a start/end moment of the $1^{st}$ symbol of the second DCI, or may be a time interval between a start/end moment of the $1^{st}$ symbol of the first DCI and a start/end moment of a last symbol of the second DCI, or may be a time interval between a start/end moment of the last symbol of the first DCI and a start/end moment of the last symbol of the second DCI. A definition of the time interval between the first DCI and the second DCI is not limited in this application.

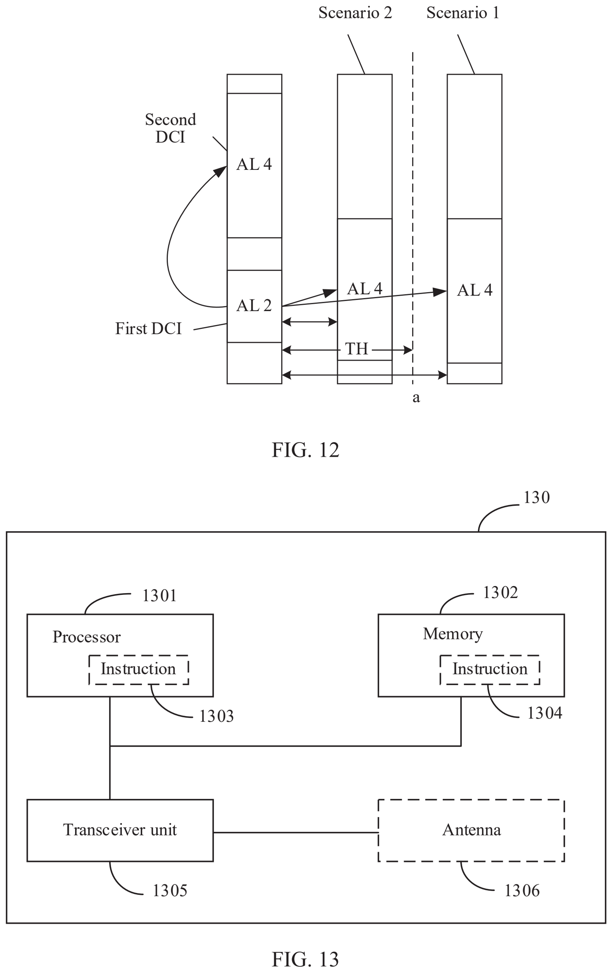

For example, FIG. 12 is a diagram of a minimum time interval when the base station schedules the PUSCH by using the two levels of DCI. It is assumed that the first DCI is carried on a PDCCH candidate at an AL 2. After the second PDCCH candidate set is determined according to the foregoing embodiment, the second DCI is detected on a PDCCH candidate that is in the second PDCCH candidate set and whose AL is an AL 4. When receiving the first DCI in step 111, the UE determines a time point a based on end time at which the first DCI is received plus a threshold TH. Then, there are two scenarios.

If end time at which the UE receives the second DCI is later than the time point a, this belongs to Scenario 1. In other words, the time interval between the first DCI and the second DCI is greater than the threshold TH. The UE determines the minimum time interval between the second DCI and the PUSCH as a minimum time interval currently configured by a network side, to perform PUSCH uplink transmitting.

If the end time at which the UE receives the second DCI is earlier than the time point a, this belongs to Scenario 2. In other words, the time interval between the first DCI and the second DCI is less than the threshold TH. The UE may add at least one preset time period to the minimum time interval between the second DCI and the PUSCH that is currently configured by the network side, to increase the minimum time interval between the second DCI and the PUSCH. In this way, when the time interval between the first DCI and the second DCI is small, if the UE has not completed parsing of the first DCI when receiving the second DCI, the UE may continue to complete parsing of the first DCI and parsing of the second DCI within the time interval between the second DCI and the PUSCH, perform PUSCH uplink transmitting configuration based on the parsing result of the first DCI and the parsing result of the second DCI, and perform encoding and modulation processing on the data.

In this way, in this application, the minimum time interval between the second DCI and the data channel is adjusted based on the time interval between the first DCI and the second DCI, so that a success rate of parsing the two levels of DCI by the UE can be increased, and implementation complexity of the UE can be reduced, to improve transmission efficiency of scheduling the data channel by using the two levels of DCI.

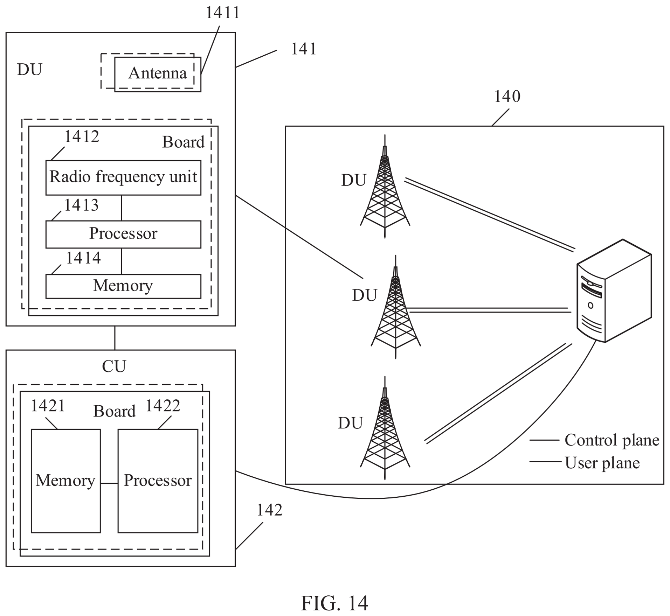

The foregoing describes the communication method in embodiments of this application with reference to FIG. 4 to FIG. 12. The following describes a communication apparatus in embodiments of this application with reference to FIG. 13 and FIG. 14, for example, a terminal device, an apparatus (for example, a processor, a circuit, or a chip) used in the terminal device, a network device, or an apparatus (for example, a processor, a circuit, or a chip) used in the network device.

FIG. 13 is a diagram of a structure of a terminal device according to an embodiment of this application. The terminal device is applicable to the communication system shown in FIG. 4, and performs a function of the terminal device in the foregoing method embodiments. For ease of description, FIG. 13 shows only main components of the terminal device. As shown in FIG. 13, the terminal device 130 includes a processor, a memory, a control circuit, an antenna, and an input/output apparatus. The processor is mainly configured to process a communication protocol and communication data, control the entire terminal device, execute a software program, and process data of the software program, for example, configured to support the terminal device in performing actions described in the foregoing method embodiments. The memory is mainly configured to store the software program and the data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to receive data input by a user and output data to the user.

After the terminal device is powered on, the processor may read the software program in the memory, explain and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends a radio frequency signal through the antenna in the form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 13 shows only one memory 1302 and only one processor 1301. In an actual terminal device, there may be a plurality of processors 1301 and a plurality of memories 1302. The memory 1302 may also be referred to as a storage medium, a storage device, or the like. The memory 1302 may be a storage element located on a same chip as the processor 1301, that is, an on-chip storage element, or may be an independent storage element. This is not limited in embodiments of this application.

In an optional implementation, the terminal device may include a baseband processor and a central processing unit. The baseband processor is mainly configured to process the communication protocol and the communication data. The central processing unit is mainly configured to control the entire terminal device, execute the software program, and process the data of the software program. The processor 1301 in FIG. 13 may integrate functions of the baseband processor and the central processing unit. A person skilled in the art may understand that the baseband processor and the central processing unit may alternatively be independent processors, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In embodiments of this application, the antenna 1306 and the control circuit that have receiving and sending functions may be considered as a transceiver unit 1305 of the terminal device 130, for example, configured to support the terminal device in performing the receiving function and the sending function. The processor 1301 having a processing function is considered as a processing unit of the terminal device 130. As shown in FIG. 13, the terminal device 130 includes the transceiver unit 1305 and the processor 1301. The transceiver unit 1305 may also be referred to as a transceiver, a transceiver machine, a transceiver apparatus, or the like. Optionally, a component configured to implement a receiving function in the transceiver unit 1305 may be considered as a receiving unit, and a component configured to implement a sending function in the transceiver unit 1305 may be considered as a sending unit. In other words, the transceiver unit 1305 includes a receiving unit and a sending unit. The receiving unit may also be referred to as a receiver, an input port, a receiving circuit, or the like. The sending unit may be referred to as a transmitter machine, a transmitter, a transmit circuit, or the like.

The processor 1301 may be configured to execute instructions 1303 executed by the processor 1301, and may be further configured to execute instructions 1304 stored in the memory 1302, to control the transceiver unit 1305 to receive a signal and/or send a signal, so as to complete the function of the terminal device in the foregoing method embodiments. The processor 1301 further includes an interface, configured to implement a signal input/output function. In an implementation, a function of the transceiver unit 1305 may be implemented by using a transceiver circuit or a dedicated transceiver chip.

FIG. 14 is a diagram of a structure of a network device according to an embodiment of this application, for example, may be a diagram of a structure of a base station. As shown in FIG. 14, the base station may be used in the system shown in FIG. 4, to perform a function of the network device in the foregoing method embodiments. The base station 140 may include one or more DUs 141 and one or more CUs 142. The CU 142 may communicate with an NG core (next-generation core, NC) network. The DU 141 may include at least one radio frequency unit 1412, at least one processor 1413, and at least one memory 1414. The DU 141 may further include at least one antenna 1411. The DU 141 is mainly configured to receive and send radio frequency signals, perform conversion between a radio frequency signal and a baseband signal, and perform partial baseband processing. The CU 142 may include at least one processor 1422 and at least one memory 1421. The CU 142 and the DU 141 may communicate with each other through an interface. A control plane (Control plane) interface may be Fs-C, for example, F1-C, and a user plane (User Plane) interface may be Fs-U, for example, F1-U.

The CU 142 is mainly configured to perform baseband processing, control a base station, and the like. The DU 141 and the CU 142 may be physically disposed together, or may be physically separated, that is, a distributed base station. The CU 142 is a control center of the base station, may also be referred to as a processing unit, and is mainly configured to implement a baseband processing function. For example, the CU 142 may be configured to control the base station to perform an operation procedure related to the network device in the foregoing method embodiments.

Specifically, baseband processing on the CU and the DU may be divided based on protocol layers of a radio network. For example, functions of a packet data convergence protocol (packet data convergence protocol, PDCP) layer and a protocol layer above the PDCP layer are set in the CU. Functions of protocol layers below the PDCP layer, such as a radio link control (radio link control, RLC) layer and a media access control (media access control, MAC) layer, are set in the DU. For another example, the CU implements functions of a radio resource control (radio resource control, RRC) layer and a packet data convergence protocol (packet data convergence protocol, PDCP) layer. The DU implements functions of a radio link control (radio link control, RLC) layer, a medium access control (medium access control, MAC) layer, and a physical (physical, PHY) layer.

In addition, optionally (not shown in the figure), the base station 140 may include one or more antennas, one or more radio frequency units, one or more DUs, and one or more CUs. The DU may include at least one processor and at least one memory, the at least one antenna and the at least one radio frequency unit may be integrated into one antenna apparatus, and the CU may include at least one processor and at least one memory.

In an example, the CU 142 may include one or more boards. A plurality of boards may jointly support a radio access network (for example, a 5G network) of a single access indication, or may respectively support radio access networks (for example, an LTE network, a 5G network, or another network) of different access standards. The memory 1421 and the processor 1422 may serve the one or more boards. In other words, a memory and a processor may be disposed on each board. Alternatively, a plurality of boards may share a same memory and a same processor. In addition, a necessary circuit may further be disposed on each board. The DU 141 may include one or a plurality of boards. A plurality of boards may jointly support a radio access network (for example, a 5G network) of a single access standard, or may respectively support radio access networks (for example, an LTE network, a 5G network, or another network) of different access standards. The memory 1414 and the processor 1413 may serve the one or more boards. In other words, a memory and a processor may be disposed on each board. Alternatively, a plurality of boards may share a same memory and a same processor. In addition, a necessary circuit may further be disposed on each board.

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing unit used for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

It should be understood that, the processor in embodiments of this application may be a CPU. Alternatively, the processor may be another general-purpose processor, a digital signal processor (digital signal processor, DSP), an application-specific integrated circuit (application-specific integrated circuit, ASIC), a field programmable gate array (Field Programmable Gate Array, FPGA), or another programmable logic device, a discrete gate or transistor logic device, a discrete hardware component, or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing unit used for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

An embodiment of this application further provides a communication system. The communication system includes the foregoing network device (radio access network device) and terminal device.

An embodiment of this application further provides a computer-readable medium, configured to store computer program code. The computer program includes instructions used for performing the method performed by one of the network device and the terminal device in the communication method in the foregoing methods. The readable medium may be a ROM or a RAM. This is not limited in embodiments of this application.

This application further provides a computer program product. The computer program product includes instructions. When the instructions are executed, a terminal device and a network device are caused to respectively perform operations corresponding to the terminal device and the network device in the foregoing methods.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, to cause a communication apparatus in which the chip is used to perform the operations of the terminal device and the network device in the method provided in the foregoing embodiments of this application.

Optionally, any communication apparatus provided in embodiments of this application may include the system chip.

Optionally, the computer instructions are stored in a storage unit.

Optionally, the storage unit is a storage unit in the chip, for example, a register or a cache. Alternatively, the storage unit may be a storage unit that is in the communication apparatus and that is located outside the chip, for example, a ROM, another type of static storage device that can store static information and instructions, or a RAM. The processor described above may be a CPU, a microprocessor, an ASIC, or one or more integrated circuits configured to control execution of a program for the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to the same device. It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

All or some of the foregoing embodiments may be implemented using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

In this application, names may be assigned to various objects such as messages/information/devices/network elements/systems/apparatuses/actions/operations/procedures/concepts. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A control channel transmission method, comprising:

   receiving indication information, wherein the indication information indicates a first physical downlink control channel candidate PDCCH candidate set;
   receiving first downlink control information DCI; and
   monitoring second DCI on a second PDCCH candidate set, wherein the second PDCCH candidate set is determined based on the first DCI, and the second PDCCH candidate set belongs to the first PDCCH candidate set.

2. The method according to claim 1, wherein the monitoring of the second DCI on the second PDCCH candidate set comprises:
   when the first DCI is detected within a first time interval, monitoring the second DCI on the second PDCCH candidate set within the first time interval.

3. A control channel transmission method, comprising:

   sending indication information, wherein the indication information indicates a first PDCCH candidate set;
   sending first DCI, wherein the first DCI indicates a second PDCCH candidate set, and the second PDCCH candidate set belongs to the first PDCCH candidate set; and
   sending second DCI on the second PDCCH candidate set.

4. The method according to any one of claims 1 to 3, wherein
   the first DCI comprises an indication of a quantity of bits of the second DCI.

5. The method according to any one of claims 1 to 4, wherein
   the second PDCCH candidate set is determined based on an aggregation level AL of a PDCCH candidate carrying the first DCI.

6. The method according to claim 5, wherein

   a PDCCH candidate in the second PDCCH candidate set is a PDCCH candidate that is in the first PDCCH candidate set and whose AL is greater than or equal to a first AL, wherein
   the first AL is determined based on a quantity of bits of the first DCI, the AL of the PDCCH candidate carrying the first DCI, and the quantity of bits of the second DCI; or the first AL is determined based on the AL of the PDCCH candidate carrying the first DCI and a quantity of carriers scheduled by the second DCI.

7. The method according to claim 6, wherein
   a quantity of PDCCH candidates in the second PDCCH candidate set is less than or equal to a preset total quantity.

8. The method according to claim 7, wherein
   the PDCCH candidates in the second PDCCH candidate set are the first preset total quantity of PDCCH candidates obtained by sorting, in ascending order of ALs, PDCCH candidates that are in the first PDCCH candidate set and whose ALs are greater than or equal to the first AL.

9. The method according to claim 7 or 8, wherein
   a blind detection number of PDCCH candidates in the first PDCCH candidate set is determined based on the preset total quantity.

10. The method according to claim 6, wherein

    the PDCCH candidates in the second PDCCH candidate set are PDCCH candidates corresponding to the first preset level quantity of ALs obtained by sorting, in ascending order of ALs, the ALs in the first PDCCH candidate set that are greater than or equal to the first AL; and

a quantity of PDCCH candidates corresponding to any AL in the second PDCCH candidate set does not exceed a preset quantity corresponding to the AL.

11. The method according to claim 10, wherein
a blind detection number of PDCCH candidates in the first PDCCH candidate set is determined based on the preset level quantity and a preset quantity corresponding to each AL in the second PDCCH candidate set.

12. The method according to claim 6, wherein
a quantity of ALs of PDCCH candidates in the second PDCCH candidate set is less than or equal to a preset level quantity.

13. The method according to claim 12, wherein
PDCCH candidates in the second PDCCH candidate set are PDCCH candidates corresponding to the first preset level quantity of ALs obtained by sorting, in ascending order of ALs, the ALs in the first PDCCH candidate set that are greater than or equal to the first AL.

14. The method according to claim 13, wherein
a blind detection number of PDCCH candidates in the first PDCCH candidate set is determined based on the preset level quantity.

15. The method according to any one of claims 1 to 14, wherein

the number of non-overlapping control channel elements CCEs of the PDCCH candidates in the first PDCCH candidate set is determined based on a maximum number of CCEs in numbers of CCEs respectively corresponding to a plurality of PDCCH candidate subsets that are obtained by traversing a plurality of possible monitoring results for carrying the first DCI, wherein
the plurality of PDCCH candidate subsets belong to the first PDCCH candidate set, and one of the plurality of PDCCH candidate subsets is the second PDCCH candidate set.

16. The method according to claim 15, wherein

the plurality of monitoring results for carrying the first DCI are a plurality of optional ALs of the PDCCH candidate carrying the first DCI; and
the quantities of CCEs respectively corresponding to the plurality of PDCCH candidate subsets that are obtained by traversing the plurality of possible monitoring results for the first DCI comprise:
quantities of CCEs respectively corresponding to PDCCH candidate subsets that are obtained based on the plurality of optional ALs of the PDCCH candidate carrying the first DCI, the quantity of bits of the first DCI, and a plurality of possible quantities of bits of the second DCI and that correspond to each optional AL and each possible quantity of bits of the second DCI.

17. The method according to any one of claims 1 to 16, wherein
a minimum time interval between the second DCI and a data channel scheduled by using the second DCI is determined based on a time interval between the first DCI and the second DCI.

18. The method according to claim 17, wherein

a first minimum time interval is a minimum time interval between the second DCI and the data channel when the time interval between the first DCI and the second DCI is greater than or equal to a threshold;
a second minimum time interval is a minimum time interval between the second DCI and the data channel when the time interval between the first DCI and the second DCI is less than the threshold; and
the first minimum time interval is less than the second minimum time interval.

19. A communication apparatus, comprising:

a receiving unit, configured to receive indication information, wherein the indication information indicates a first physical downlink control channel candidate PDCCH candidate set, wherein
the receiving unit is further configured to receive first downlink control information DCI; and
a monitoring unit, configured to monitor second DCI on a second PDCCH candidate set, wherein the second PDCCH candidate set is determined based on the first DCI, and the second PDCCH candidate set belongs to the first PDCCH candidate set.

20. A communication apparatus, comprising:

a sending unit, configured to send indication information, wherein the indication information indicates a first PDCCH candidate set, wherein
the sending unit is further configured to send first DCI, wherein the first DCI indicates a second PDCCH candidate set, and the second PDCCH candidate set belongs to the first PDCCH candidate set; and
the sending unit is further configured to send second DCI on the second PDCCH candidate set.

21. A communication system, comprising the communication apparatus according to claim 19 and the communication apparatus according to claim 20.

22. A computer-readable storage medium, comprising computer instructions, wherein when the computer instructions are run on an electronic device, the electronic device is caused to perform the method according to any one of claims 1 to 18.

Control resource set

Search space set 1          Search space set 2

Frequency

Frequency
domain
resource of
the control
resource set

Duration of the
control resource set

...          ...

Time

FIG. 1

CSS          CSS

44

One slot

(a)

USS          2

CSS          USS          USS          USS          CCE          USS          USS          USS

44

One slot

(b)

CSS          USS          USS          CSS          USS          USS

44

One slot

(c)

FIG. 2

One slot

(d)

One slot

(e)

FIG. 2 (continued)

PDCCH $\geq T_{proc,2}$ PUSCH

One symbol

FIG. 3

FIG. 4

Radio access network device | Terminal device

501: Indication information, where the indication information indicates a first PDCCH candidate set

502: First DCI

503: Monitor second DCI on a second PDCCH candidate set, where the second PDCCH candidate set is determined based on the first DCI, and the second PDCCH candidate set belongs to the first PDCCH candidate set

FIG. 5

First PDCCH candidate set

AL 2

AL 4

AL 2

AL 8

AL 4

FIG. 6

FIG. 7

A preset total quantity is 1

(a)

FIG. 8

First PDCCH candidate set

Second PDCCH candidate set

Second PDCCH candidate set

First DCI — AL 1

First DCI — AL 2

AL 2

AL 2

AL 4

AL 4

A preset total quantity is 2

(b)

Second PDCCH candidate set

First PDCCH candidate set

Second PDCCH candidate set

First DCI — AL 1

First DCI — AL 2

AL 2

AL 2

AL 4

AL 4

AL 4

AL 8

A preset total quantity is 3

(c)

FIG. 8 (continued)

FIG. 9

FIG. 9 (continued)

First PDCCH candidate set

First DCI — AL 1

AL 2

First DCI — AL 2

AL 4

A CCE count is 4

(a)

First PDCCH candidate set

First DCI — AL 1

AL 2

AL 4

AL 2

First DCI — AL 2

AL 4

A CCE count is 8

(b)

FIG. 10

First PDCCH candidate set

First
DCI

AL 1

AL 2

AL 8

First
DCI

AL 2

AL 4    AL 4

A CCE count is 12

(c)

FIG. 10 (continued)

Base station                                        UE

111: First DCI

112: Second DCI

113: PUSCH

FIG. 11

FIG. 12

FIG. 13

FIG. 14

## INTERNATIONAL SEARCH REPORT

| International application No. |
|---|
| **PCT/CN2024/113169** |

| A. | CLASSIFICATION OF SUBJECT MATTER |
|---|---|

H04W 74/00(2009.01)i

According to International Patent Classification (IPC) or to both national classification and IPC

| B. | FIELDS SEARCHED |
|---|---|

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

DWPI; WPABS; CNTXT; CNKI; ENTXT; 3GPP: 下行控制信息, 物理下行控制信道, 候选, 监测, 指示, 确定, 属于, 包含, DCI, PDCCH, candidat+, monitor+, indicat+, determin+, belong+ to, includ+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2016254878 A1 (PANASONIC IP CORP.) 01 September 2016 (2016-09-01) description, paragraphs 31-96, and figure 6 | 1-22 |
| A | CN 109392112 A (CHINA ACADEMY OF TELECOMMUNICATIONS TECHNOLOGY) 26 February 2019 (2019-02-26) entire document | 1-22 |
| A | CN 116326119 A (ZTE CORP.) 23 June 2023 (2023-06-23) entire document | 1-22 |
| A | CN 116648966 A (HUAWEI TECHNOLOGIES CO., LTD.) 25 August 2023 (2023-08-25) entire document | 1-22 |
| A | US 2023057605 A1 (SAMSUNG ELECTRONICS CO., LTD.) 23 February 2023 (2023-02-23) entire document | 1-22 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2024** | **14 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/113169**

| Patent document cited in search report | | | Publication date (day/month/year) | Patent family member(s) | | | Publication date (day/month/year) |
|---|---|---|---|---|---|---|---|
| US | 2016254878 | A1 | 01 September 2016 | WO | 2015062051 | A1 | 07 May 2015 |
| | | | | US | 10218461 | B2 | 26 February 2019 |
| | | | | JP | 2016540408 | A | 22 December 2016 |
| | | | | JP | 6396445 | B2 | 26 September 2018 |
| CN | 109392112 | A | 26 February 2019 | WO | 2019029421 | A1 | 14 February 2019 |
| | | | | EP | 3668219 | A1 | 17 June 2020 |
| | | | | EP | 3668219 | A4 | 05 August 2020 |
| | | | | EP | 3668219 | B1 | 12 June 2024 |
| | | | | US | 2020196284 | A1 | 18 June 2020 |
| | | | | US | 11337199 | B2 | 17 May 2022 |
| CN | 116326119 | A | 23 June 2023 | | None | | |
| CN | 116648966 | A | 25 August 2023 | | None | | |
| US | 2023057605 | A1 | 23 February 2023 | EP | 4378109 | A1 | 05 June 2024 |
| | | | | WO | 2023008971 | A1 | 02 February 2023 |
| | | | | KR | 20240042637 | A | 02 April 2024 |

Form PCT/ISA/210 (patent family annex) (July 2022)

**REFERENCES CITED IN THE DESCRIPTION**

**Patent documents cited in the description**

- CN 202311112834